# EUROPEAN PATENT APPLICATION

(11) **EP 4 750 218 A1**
(43) Date of publication of application: **27.05.2026**
(21) Application number: 24843519.0
(22) Date of filing: 18.07.2024
(51) Int. Cl.: H04W 76/16, H04W 8/24, H04W 60/00, H04W 8/18, H04W 40/24, H04L 41/0894, H04W 8/02, H04W 88/14

(54) **COMMUNICATION RELATED TO DUAL STEERING**

(30) Priority: 18.07.2023 US 202363527337 P; 04.01.2024 US 202463617424 P; 04.01.2024 US 202463617427 P; 08.02.2024 US 202463551081 P; 29.03.2024 US 202463571459 P
(71) Applicant: LG Electronics Inc., Yeongdeungpo-gu Seoul 07336 (KR)
(72) Inventor: KIM, Laeyoung, Seoul 06772 (KR); YOUN, Myungjune, Seoul 06772 (KR); KIM, Seokjung, Seoul 06772 (KR)
(74) Representative: Frenkel, Matthias Alexander
(86) International application number: PCT/KR2024/010343
(87) International publication number: WO 2025/018805

(57) **Abstract**

One disclosure of the present specification (present disclosure) provides a method by which an AMF performs communication. The method may include the steps of: receiving a registration request message including a SUPI of a first UE from the first UE; transmitting a registration message including the SUPI of the first UE to a UDM; receiving subscription information related to the first UE from the UDM; transmitting a registration acceptance message to the first UE; receiving a PDU session establishment request message from a second UE included in a device; and selecting an SMF for a second PDU session.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Dual steering, which provides services to terminals by simultaneously using two 3GPP accesses in 5GS, is being discussed. However, according to prior arts, there is a problem that it cannot effectively support dual steering.

### DISCLOSURE

### TECHNICAL SOLUTION

According to an embodiment of the present disclosure, a method is provided for an AMF to perform communication. The method may include: receiving a registration request message including a SUPI of a first UE from the first UE; transmitting a registration message including the SUPI of the first UE to the UDM; receiving subscription information related to the first UE from the UDM; transmitting a registration accept message to the first UE; receiving a PDU session establishment request message for establishing a second PDU session from a second UE included in the device; and selecting the SMF related to the first PDU session as the SMF for the second PDU session.

According to one embodiment, a device for implementing the method is provided.

According to an embodiment of the present disclosure, a method is provided for a device including at least one UE to perform communication. The method may include: transmitting a registration request message including the SUPI of the first UE included in the device to the AMF; and transmitting a PDU session establishment request message for establishing a second PDU session of the second UE included in the device to the AMF.

According to an embodiment, a device implementing the method is provided.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of UE to which implementations of the present disclosure are applied.
FIG. 4 shows an example of 5G system architecture to which implementations of the present disclosure are applied.
FIGS. 5 and 6 show an example of a registration procedure to which implementations of the present disclosure are applied.
FIG. 7 is an exemplary diagram illustrating an example of an architecture for implementing the concept of network slicing.
FIG. 8 is an exemplary diagram illustrating another example of an architecture for implementing the concept of network slicing.
FIG. 9 illustrates an example of a dual 5G satellite access according to an embodiment of the present disclosure.
FIG. 10 illustrates an example of a traffic switching according to an embodiment of the present disclosure.
FIG. 11a is a first example of a multi connectivity according to an embodiment of the present disclosure. FIG. 11b is a second example of a multi connectivity according to an embodiment of the present disclosure. FIG. 11c is a third example of a multi connectivity according to an embodiment of the present disclosure. FIG. 11d is a fourth example of a multi connectivity according to an embodiment of the present disclosure.
FIG. 12 is an example of a single 3GPP access connectivity according to an embodiment of the present disclosure.
FIG. 13 is an example of a dual 3GPP access connectivity according to an embodiment of the present disclosure.
FIG. 14 shows the first embodiment of the first disclosure of the present disclosure according to one embodiment of the present disclosure.
FIG. 15 shows the second embodiment of the first disclosure of the present disclosure according to one embodiment of the present disclosure.
FIG. 16 shows the third embodiment of the first disclosure of the present disclosure according to one embodiment of the present disclosure.
FIG. 17 illustrates an exemplary of example 2-1 according to an embodiment of the second disclosure of the present disclosure.
FIG. 18 illustrates the first embodiment and/or the second embodiment of example 2-2 according to an embodiment of the disclosure of the present disclosure.
FIG. 19 is an example of a Dualsteer PDU session according to an embodiment of the disclosure of the present disclosure.
FIG. 20 illustrates an example of a Dualsteer PDU session according to an embodiment of the present disclosure supporting non-3GPP access.
FIG. 21 illustrates a registration procedure for a Dualsteer device according to an embodiment of the present disclosure.
FIG. 22 illustrates an establishment procedure for a Dualsteer PDU session according to an embodiment of the present disclosure.
FIG. 23 illustrates an example of moving a leg of a Dualsteer PDU session between 3GPP access and non-3GPP access according to an embodiment of the present disclosure.
FIG. 24 illustrates an example of operations according to an embodiment of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

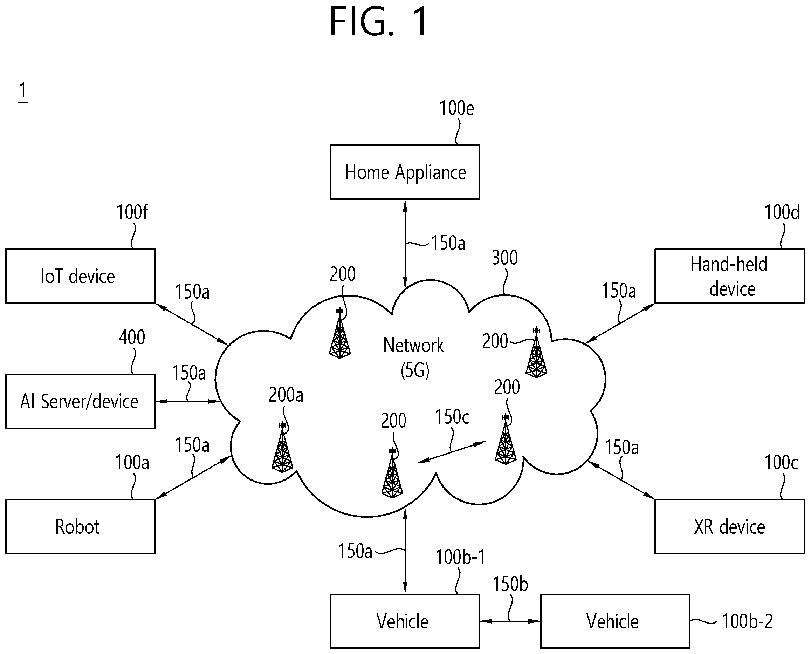

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

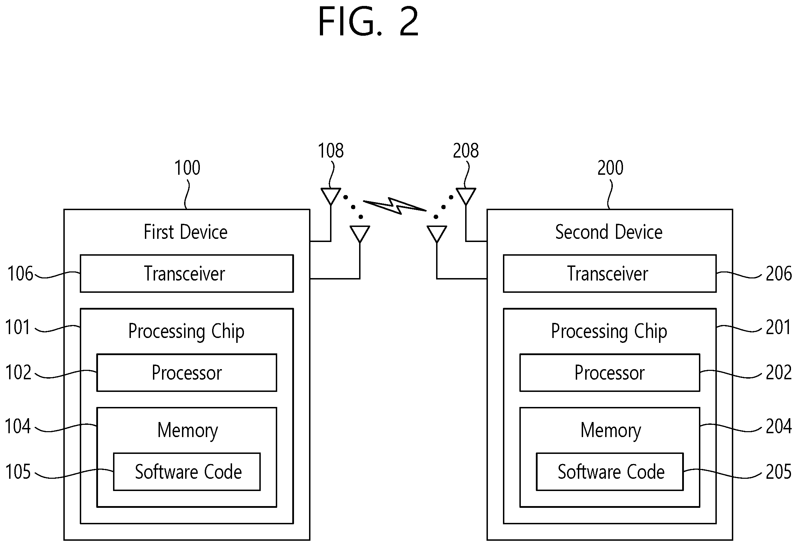

FIG. 2 shows an example of wireless devices to which implementations of the present disclosure are applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in UL and as a receiving device in DL. In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

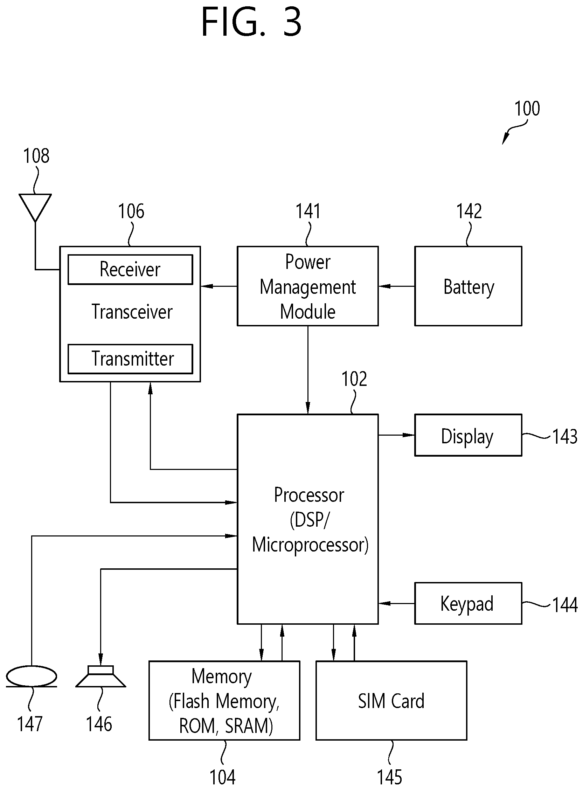

FIG. 3 shows an example of UE to which implementations of the present disclosure are applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

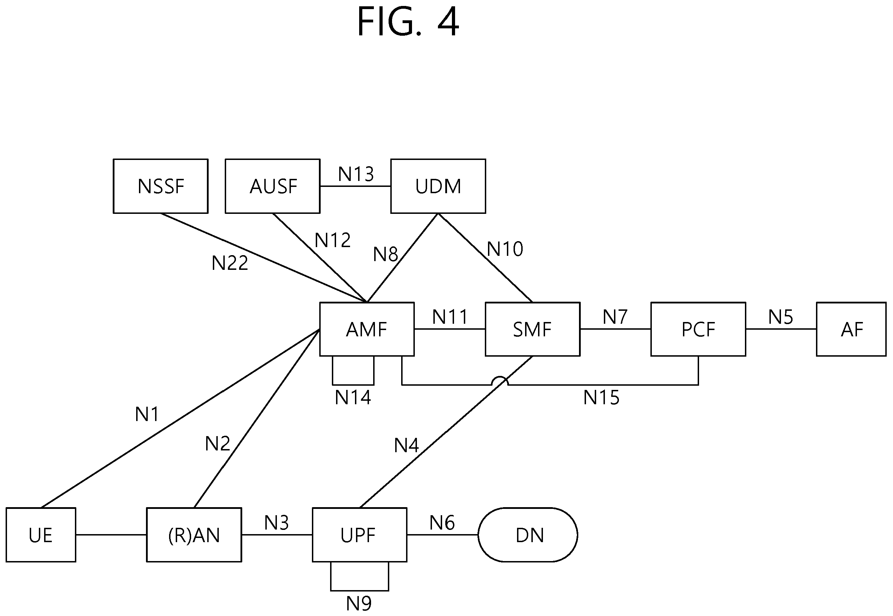

FIG. 4 shows an example of 5G system architecture to which implementations of the present disclosure are applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Reference may be made to section 4.2.2.2 of 3GPP TS 23.502 V16.3.0 (2019-12).

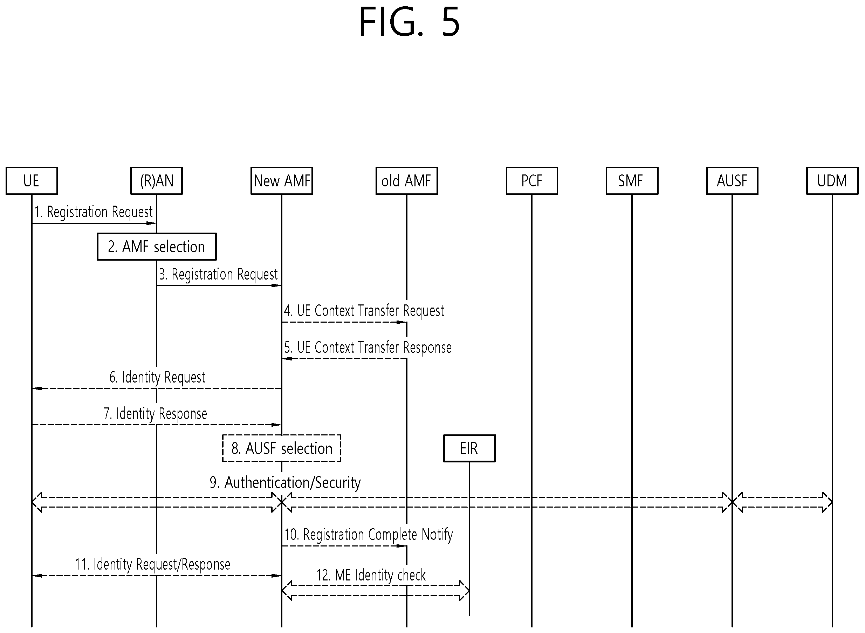

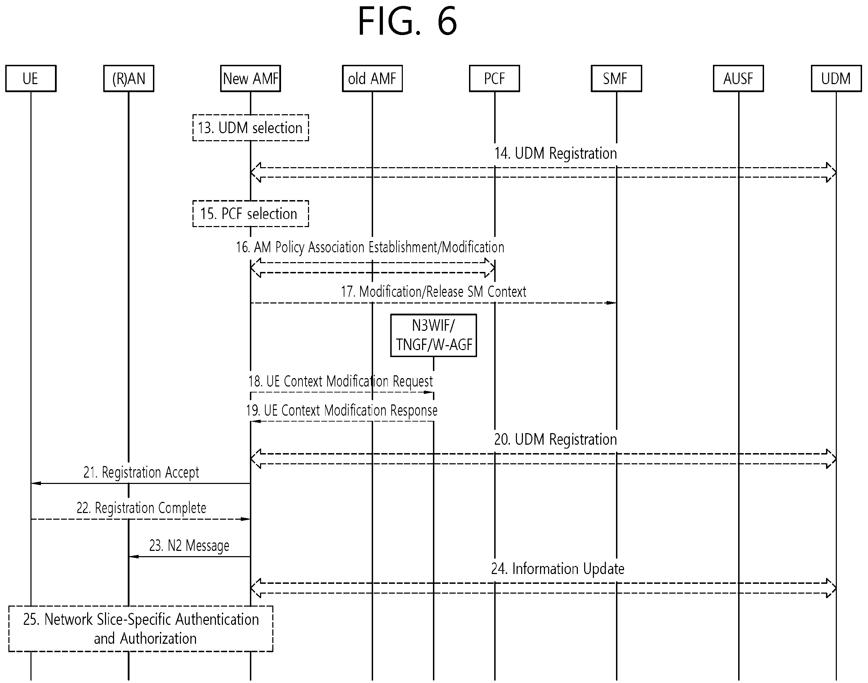

FIGS. 5 and 6 show an example of a registration procedure to which implementations of the present disclosure are applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included, and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization (NSSAA) procedure.

### <Network Slice>

Hereinafter, network slicing to be introduced in next-generation mobile communication will be described.

Next-generation mobile communication introduces the concept of network slicing in order to provide various services through one network. Here, the network slicing is a combination of network nodes having functions necessary to provide a specific service. A network node constituting a slice instance may be a hardware independent node or a logically independent node.

Each slice instance may be composed of a combination of all nodes necessary to configure the entire network. In this case, one slice instance may independently provide a service to the UE.

Alternatively, the slice instance may be composed of a combination of some nodes among nodes constituting the network. In this case, the slice instance may not provide a service to the UE alone, but may provide a service to the UE in association with other existing network nodes. In addition, a plurality of slice instances may provide a service to the UE in association with each other.

A slice instance is different from a dedicated core network in that the entire network node including the Core Network (CN) node and the RAN can be separated. In addition, a slice instance is different from a dedicated core network in that network nodes can simply be logically separated.

For reference, for a network slice, quota may be used.

For example, a quota related to a network slice may include a quota for the maximum number of UEs. The quota for the maximum number of UEs may mean the maximum number of terminals that can use a network slice at the same time. As an example, each network slice information may include quota information for the maximum number of UEs (e.g., 10 pieces, 1000000 pieces, etc.).

For example, a quota related to a network slice may include a quota for the maximum number of PDU sessions. The quota for the maximum number of PDU sessions may mean the maximum number of concurrent PDU sessions supported in the network slice. For example, the maximum number of concurrent (concurrent) PDU sessions supported in a network slice may mean the maximum number of PDU sessions established at the same time in one network slice related to a DNN (Data Network Name) defined by S-NSSAI.

In 5G mobile communication, network slice quota event notification may be supported in the network slice. For example, event notification about a quota related to a network slice may be supported. For example, an AF may request an event notification about a quota related to a network slice in 5GS. Then, AF may be notified of quota for attributes related to network slices in 5GS. For example, 5GS may inform the AF whether the quota for a particular attribute has reached a specified threshold. AF may then influence the 5GS routing decision.

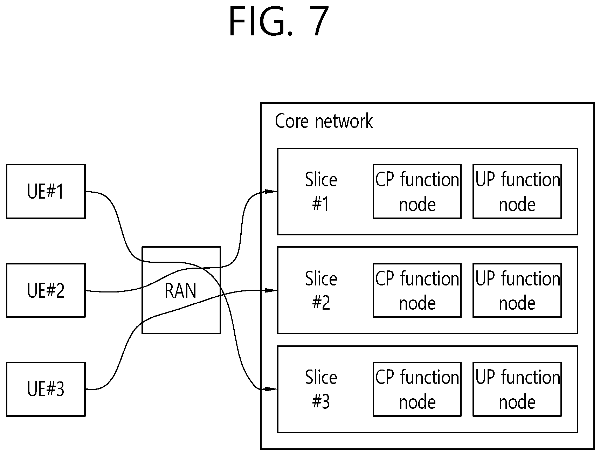

**FIG. 7** **is an exemplary diagram illustrating an example of an architecture for implementing the concept of network slicing.**

As can be seen with reference to FIG. 7, the Core Network (CN) may be divided into several slice instances. Each slice instance may include one or more of a CP function node and a UP function node.

Each UE may use a network slice instance suitable for its own service through the RAN.

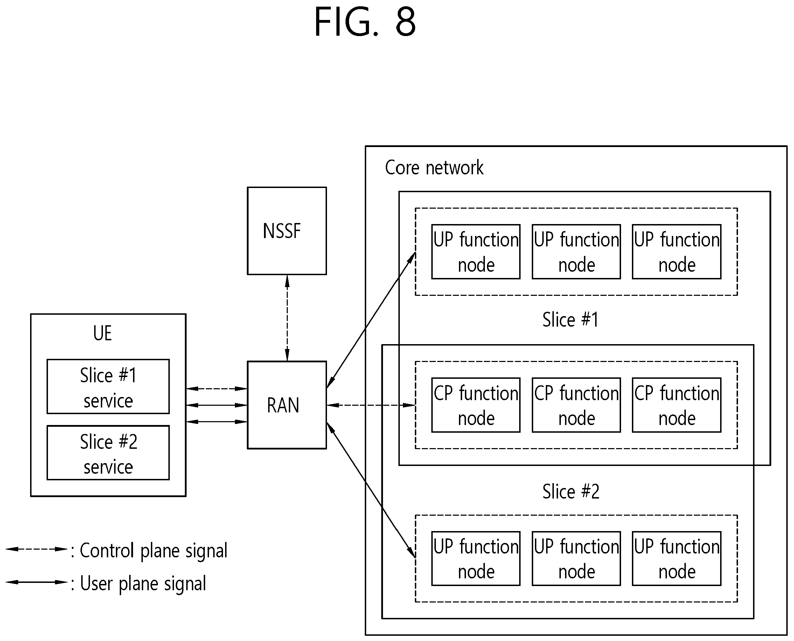

Unlike shown in FIG. 7, each slice instance may share one or more of a CP function node and a UP function node with another slice instance. This will be described with reference to FIG. 8 as follows.

**FIG. 8** **is an exemplary diagram illustrating another example of an architecture for implementing the concept of network slicing.**

Referring to FIG. 8, a plurality of UP functional nodes is clustered, and similarly, a plurality of CP functional nodes is also clustered.

And, referring to FIG. 8, slice instance #1 (or referred to as instance #1) in the core network includes the first cluster of UP functional nodes. And, the slice instance #1 shares a cluster of CP functional nodes with slice #2 (or referred to as instance #2). The slice instance #2 includes a second cluster of UP functional nodes.

The illustrated NSSF selects a slice (or instance) that can accommodate the service of the UE.

The illustrated UE may use service #1 through the slice instance #1 selected by the NSSF, and may use service #2 through the slice instance #2 selected by the NSSF.

3GPP is discussing the Study on Multi-Access (DualSteer and ATSSS_Ph4) in Release 19. This study addresses solutions related to steering, switching, and splitting UE traffic across two 3GPP access links. In this context, the use cases and service requirements are described in TR 22.841 V1.1.0 "Study on Upper layer traffic steer, switch and split over dual 3GPP access".

The study objectives are as follows.

The name of the study related to dual steering may be DualSteer.

The overall architecture and functional enhancements of 5GS to support DualSteer Devices may be discussed (see TS 22.261 V19.3.0 for the definition of a DualSteer Device). The DualSteer Device supports traffic steering and switching of user data across two 3GPP access networks (for different services). The DualSteer Device may be (a) a single UE for non-concurrent data transmission across the two networks, or (b) two separate UEs for concurrent data transmission across the two networks. A subscriber of a DualSteer device holds two subscriptions/SUPIs sharing a single subscription profile from the same carrier. For a specific service, the DualSteer device transmits all traffic for that service using only a single 3GPP access network at any given time.

The following scenarios may be considered:
1. Two NR/5GC accesses may exist within a single PLMN (HPLMN or VPLMN). Each access may be NR TN or NR NTN;
2. Two NR/5GC accesses may exist across two different PLMNs (including two VPLMNs or a VPLMN and an HPLMN). Each access may be NR TN or NR NTN;
3. NR/5GC access and E-UTRA/EPC access may exist in two different PLMNs (which include two VPLMNs or a VPLMN and an HPLMN);
4. NR/5GC access and E-UTRA/EPC access in a single PLMN (HPLMN or VPLMN);
5. PNI-NPN (integrated with HPLMN or integrated with VPLMN) and PLMN access (TN/NTN and TN or NTN). This scenario assumes only non-simultaneous transmission.

For each scenario above, improvements to the subscription information aspect may be discussed.

The impact on the registration procedure for DualSteer devices may be discussed.

Improvements to session management and policies may be discussed as follows:
- Whether and how the HPLMN will improve the network policies it provides for DualSteer devices and within the network to support DualSteer devices may be discussed.

Whether and how to improve session management procedures for initial steering and potential subsequent switching may be discussed. Traffic policy is entirely controlled by the HPLMN. Assuming data anchoring in the HPLMN, data anchoring in the PNI-NPN may be assumed when using PNI-NPN and PLMN together. In this case, methods for the HPLMN to select the PSA UPF may be discussed to enable routing of 3GPP access traffic to the same PSA UPF during handover for sessions with potential switching targets.

The study related to dual steering includes a gap analysis concerning support for use cases identified by existing service requirements and functions, including the potential applicability of existing multi-NW requirements (e.g., TS 22.261 V19.3.0 Sections 6.1, 6.3, 6.18, 6.41).

The use case examples in TR 22.841 V1.1.0 are as follows.

This describes an example of an use case for a dual 5G satellite access in a maritime scenario.

This use case describes a scenario where an autonomous ship is remotely controlled from land. The ship has a UE served by two satellite RANs (GEO and LEO) belonging to the same PLMN managed by the 5G satellite operator. The ship UE has a single PLMN subscription.

Dual 5G satellite access is applied to accommodate the large data traffic volumes required for remote control operations. To enhance autonomous ship operation performance, delay-sensitive applications (e.g., remote control operations, collision/accident prevention, emergency management) utilize LEO satellite links with smaller UE-to-ground propagation delays (LEO max 30ms vs. GEO max 280ms, TS 22.261 V19.3.0 Clause 7.4.1). Other applications (e.g., delay-sensitive applications such as sensor data monitoring, video surveillance, etc.) may use GEO satellite links or aggregate traffic across both accesses.

The following preconditions may apply to this use case.

The autonomous ship may be, for example, a KASS (Korean Autonomous Surface Ship). This autonomous ship may support an dual 5G satellite connectivity (GEO and LEO).

The UE installed on the autonomous ship has a subscription to use the GEO and LEO satellite services of the 5G satellite operator.

The UE installed on the autonomous vessel registers and connects to both GEO and LEO satellite RANs.

Pursuant to the service agreement between the autonomous vessel management company and the 5G satellite operator, the 5G satellite network maintains the following policies for the autonomous ship's UE:
- Data traffic for latency-sensitive applications is routed via LEO satellite links whenever available.
- Data traffic for delay-tolerant applications is aggregated via LEO and GEO satellite links.

For use cases related to autonomous ships, service flows such as the example below may be applied.

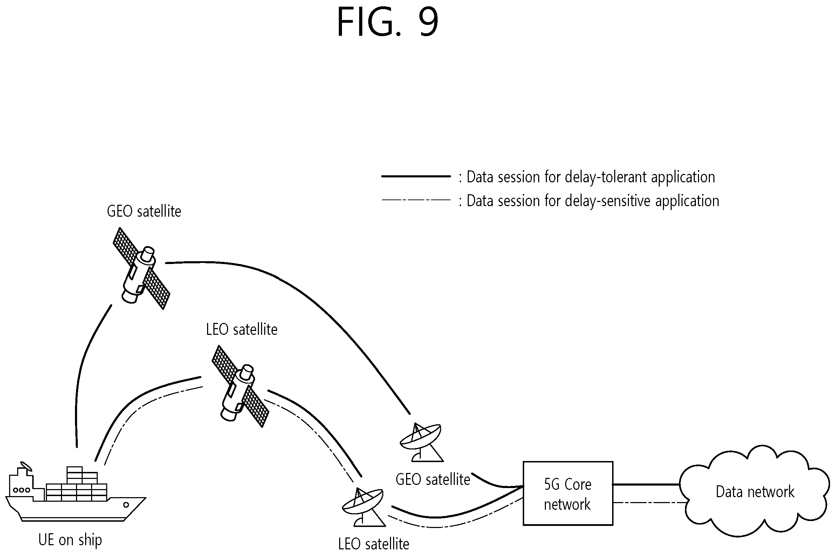

Referring to FIG. 9, a specific example of dual 5G satellite access during autonomous ship operation is illustrated.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 9** **illustrates an example of a dual 5G satellite access according to an embodiment of the present disclosure.**
1. Autonomous ships are located at sea and can be remotely controlled by a coastal control center. An autonomous vessel may have two active data sessions: one for remote control operations and one for monitoring the vessel's sensor data. According to agreed policies, remote control operation traffic (e.g., delay-sensitive traffic) is routed via LEO satellite links, while sensor data monitoring traffic (e.g., delay-tolerant traffic) is aggregated via LEO and GEO satellite links.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

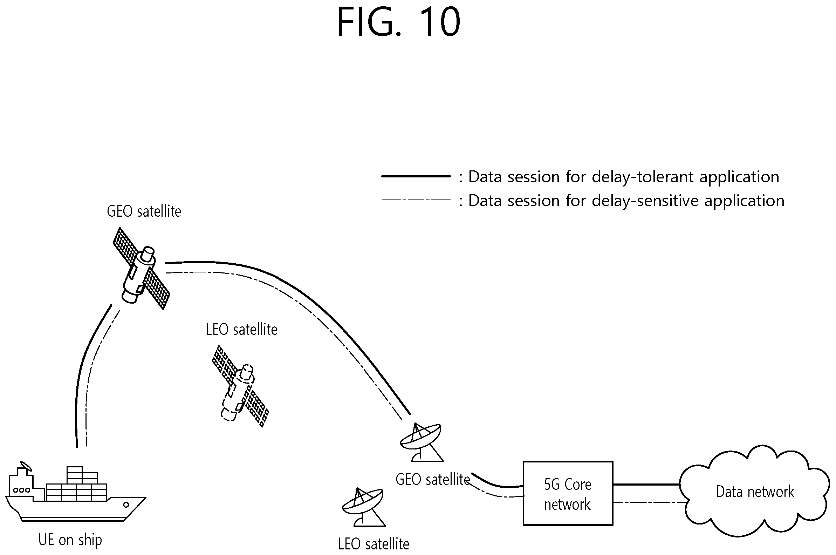

**FIG. 10** **illustrates an example of a traffic switching according to an embodiment of the present disclosure.**

FIG. 10 illustrates an example of traffic switching due to disconnection from the LEO satellite access network.

2. When LEO satellite access becomes unavailable (e.g., due to loss of line of sight between the UE and the satellite). Consequently, all traffic routed via LEO satellite access is redirected to GEO satellite access while maintaining the continuity of the data session. Applications for ship remote control (latency-sensitive) detect the increased communication delay and adjust their operation accordingly.

3. After a short time, LEO satellite access becomes available again. Therefore, the traffic distribution between the two satellite access points returns to the state seen in step 1 of FIG. 9.

The postconditions are as follows. The remote control center controls the autonomous ship throughout the route, and the autonomous ship may successfully arrive at its destination.

This describes examples of existing functions that encompass some or all of the use case functionality.

The ATSSS functionality specified in TS 23.501 V17.2.2 Section 5.32 supports dual user plane connections between a UE using one 3GPP access network and one non-3GPP access network and the data network.

The 5G system shall be capable of dynamically offloading a portion of traffic based on operator policy, considering traffic load and traffic type (e.g., offloading from a 3GPP RAT to a non-3GPP access technology).

According to operator policy, a 5G system may provide simultaneous data transmission over different access technologies (e.g., NR, E-UTRA, non-3GPP) to access one or more 3GPP services.

When a UE uses two or more access technologies simultaneously, the 5G system must be able to optimally distribute user traffic by selecting one of the access technologies in use, considering factors such as the service, traffic characteristics, radio characteristics, and the UE's movement speed.

The 5G system shall support UEs with multiple radio and single radio capabilities.

The 5G system may provide services using satellite access.

A satellite-enabled 5G system shall support various configurations where the radio access network is a satellite NG-RAN, a non-3GPP satellite access network, or both.

Potential new requirements needed to support use cases may include the following examples. The 5G system must support mechanisms to coordinate, split, and transfer user plane traffic across two 5G satellite access networks belonging to the same PLMN, where the user plane traffic is anchored to the 5GC.

The use case for NTN-based dual 3GPP access is described.

When two 3GPP access links are integrated simultaneously and one of them is a non-terrestrial network, the following 5G services may be provided. This can be particularly useful in underserved areas where bandwidth is limited or access links are unstable:
- Extended mobile broadband
- Ultra-reliable service communication

Various service scenarios (e.g., residential users in remote areas, vehicles, high-speed trains, ships, or aircraft passengers) may benefit from combining terrestrial and non-terrestrial access, or combining two non-terrestrial access methods (e.g., GSO(GeoStationary Orbit) and NGSO(Non-GeoStationary Orbit)-based), to meet target service performance in terms of data speed and/or reliability.

In areas where service is not provided, the bandwidth offered by terrestrial-based access (e.g., NR or LTE) may be limited at the cell edge. Adding NTN-based NG-RAN can achieve the targeted perceived data speed.

In certain scenarios, such as inside high-speed trains, the service area may not be completely uniform along the track. The desired stability may be provided through multi connectivity, including NTN-based NG-RAN.

Therefore, a single UE can be connected and simultaneously served by the following examples:
- One NTN-based 3GPP access and one ground-based 3GPP access
- One NTN-based 3GPP access (NGSO) and another NTN-based 3GPP access (GSO)
- One NTN-based 3GPP access (NGSO) via two different satellites from the same constellation.

Dual access aggregation may occur for the uplink or downlink or both.

The same or different gNBs may provide service to an NR cell via a terrestrial access network and a satellite access network (e.g., transparent payload on board a satellite).

An NTN-based NG-RAN may refer to transparent payload satellites as well as, for example, regenerative payload satellites equipped with some gNB functions.

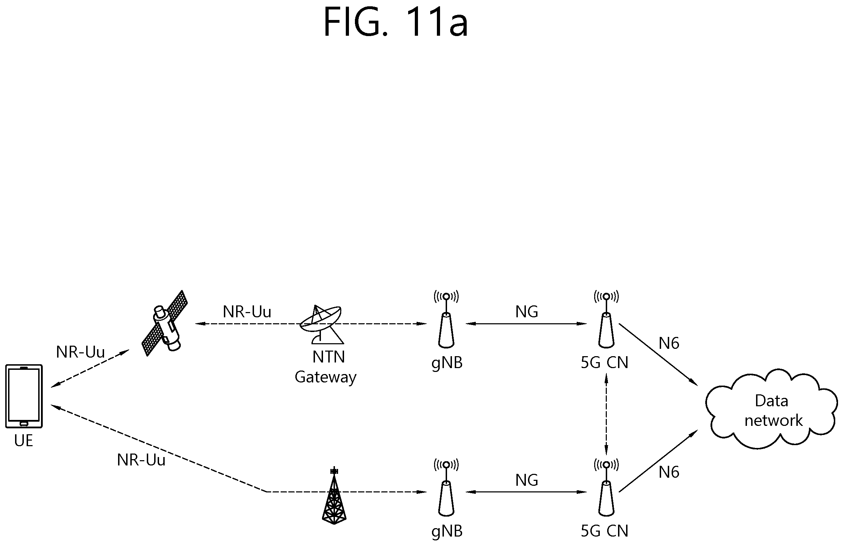

Referring to FIGS. 11a through 11d below, examples a) through d) are described.

### a) Multi-connectivity that includes transparent payload NTN-based NG-RAN and terrestrial NG-RAN

The UE connects to the 5GCN simultaneously via two accesses (e.g., transparent NTN-based NG-RAN and cellular NG-RAN). It is assumed that the NTN gateway is located within the PLMN area of the cellular access network.

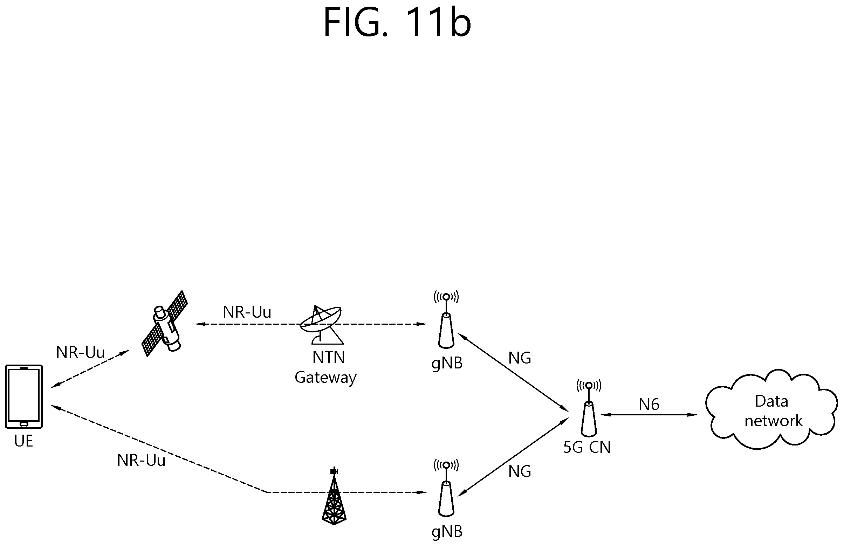

Referring to the examples in FIGS. 11a and 11b, an example of multi-connectivity that includes a transparent payload NTN-based NG-RAN and a terrestrial NG-RAN is described.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 11a** **is a first example of a multi connectivity according to an embodiment of the present disclosure.**

In the example of FIG. 11a, different operators may manage two PLMNs for multi-connectivity (assuming a business agreement exists between the two operators).

The example of FIG. 11a illustrates multi-connectivity that includes different PLMNs of a transparent NTN-based NG-RAN and a cellular NG-RAN.

As shown in FIG. 11a, the UE may connect to an access based on a transparent NTN-based NG-RAN (e.g., satellite, NTN gateway, gNB, access via the first operator's 5G CN). Additionally, the UE may connect to an access based on a terrestrial NG-RAN connected to the second operator's 5G-CN.

Alternatively, as exemplified in FIG. 11b, the two accesses for multi connectivity may be managed by the same operator.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 11b** **is a second example of a multi connectivity according to an embodiment of the present disclosure.**

In the example of FIG. 11b, PLMNs may be managed by the same operator. FIG. 11b depicts multi-connectivity (same PLMN) including transparent NTN-based NG-RAN and cellular NG-RAN.

### b) Multi-connectivity including two transparent NTN-based NG-RAN accesses

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

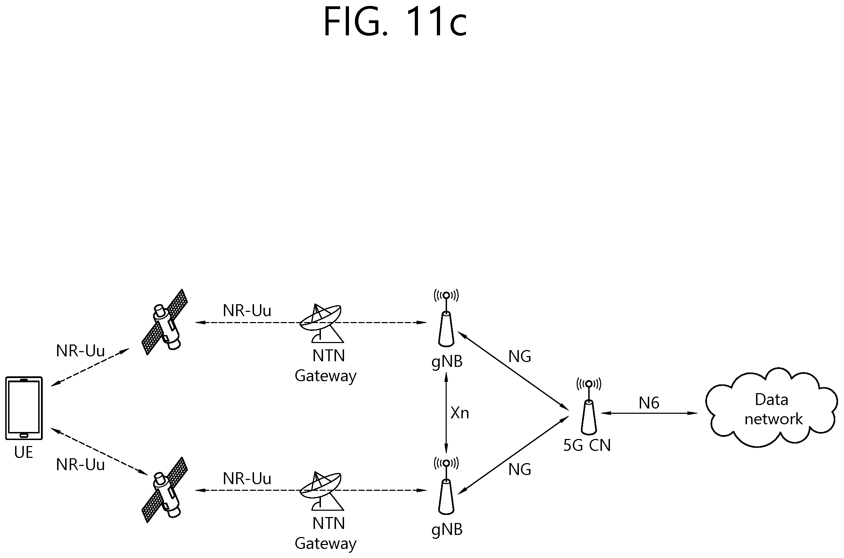

**FIG. 11c** **is a third example of a multi connectivity according to an embodiment of the present disclosure.**

FIG. 11c illustrates a multi connectivity between two transparent NTN-based NG-RANs.

For example, referring to FIG. 11c, multi-connectivity may include a combination of two transparent NTN-based NG-RANs (e.g., GSO and NGSO-based). This can be useful for providing service to UEs in areas where service is not provided. The example in FIG. 11c illustrates that a relatively low-latency NGSO-based NG-RAN may be used to support latency-sensitive traffic, while a GSO-based NG-RAN may be employed to provide additional bandwidth to meet target throughput requirements.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

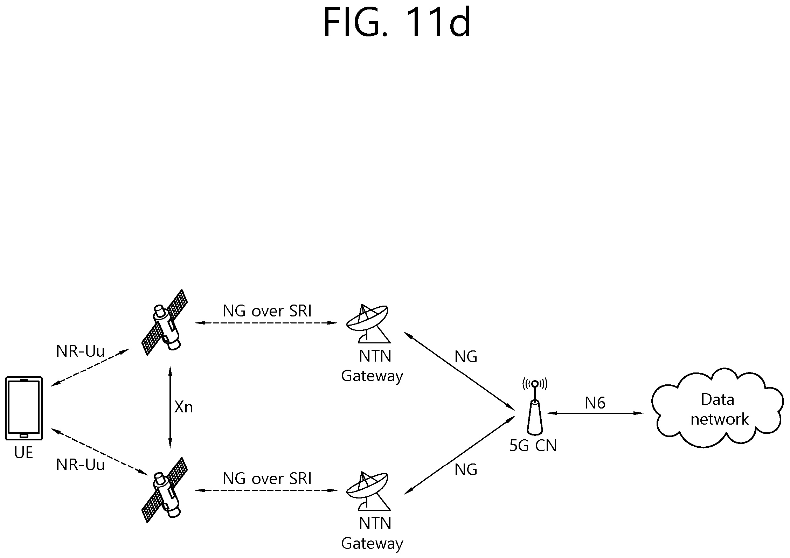

**FIG. 11d** **is a fourth example of a multi connectivity according to an embodiment of the present disclosure.**

FIG. 11d illustrates an example of a multi connectivity between two regenerative NTN-based NG-RANs (e.g., gNB onboard).

The example according to FIG. 11d is c) an example of combining two regenerative NTN-based NG-RANs (gNBs onboard) via an inter-satellite link through two satellites in the same constellation.

For reference, FIG. 11d is provided as an example. Other architectures (e.g., satellite-ground split NG-RAN architecture) may be considered. SRI denotes the satellite radio interface in FIG. 11d.

Examples of prerequisites related to this use case are as follows.

There may be some coverage overlap between the two related NG-RAN access links.

If the PLMNs of the two access links are the same, the UE connects to the 5GC providing both access links.

The 5GC is aware of the characteristics of each of the two access links.

If each access link has a different PLMN, the UE also gains access to the other network through a roaming agreement. Information about the characteristics of each access link may be exchanged between the two networks.

The UE is in connected mode on one or more access links.

The slice may be deployed and may be managed on both access links.

An example of the service flow related to this use case is as follows.

The UE performs the configuration of a VoIP, video, or data service over one 3GPP access link, but the QoS (e.g., throughput, latency, etc.) may be insufficient. If another 3GPP access link is available, this link is activated and combined with the first link to support the QoS required for the service.

Depending on the target QoS of the service, user plane traffic on the connection may be intelligently coordinated, split, and switched bidirectionally between the two 3GPP NG-RAN access links based on specific performance characteristics of each access link, such as delay, throughput, jitter, and error rate.

The QoS requirements for user plane traffic may be determined through specific policies related to different data flows or different traffic types within the same data flow.

Traffic is steered/split between access links based on QoS requirements such as latency, throughput, jitter, and error rate, traffic characteristics, wireless link conditions, and the UE's mobility rate. For example, traffic requiring low latency may be best split/steered to the access link with the lowest latency characteristics.

In the event of a handover, temporary wireless link failure, or congestion on one access link, user plane traffic may be switched to the remaining active access link. When the wireless link is re-configured, the user plane is re-split/steered across the two access links according to QoS.

The data volume and other traffic statistics reported from each access link are used for billing purposes.

According to the post-conditions, a dual NG-RAN access connection that includes at least NTN may support targeted QoS that a single access cannot support, thanks to the appropriate steering, splitting, and switching of user plane traffic.

Examples of existing capabilities that partially or fully encompass the use case functionality are as follows.

This use case may leverage and extend some of the following existing service requirements:
- Multiple Access Technology (See TS 22.261 V19.3.0 S6.3)
- Multi-network connectivity and Service Provisioning between Operators (See TS 22.261 V19.3.0 S6.18)
- Network Slicing (see TS 22.261 V19.3.0 S6.1)
- Efficient User Plane (see TS 22.261 V19.3.0 S6.5)

Potential new requirements needed to support use cases include, for example, the following.

Based on the use of at least one NR satellite RAT, the 5G system should support simultaneous data transmission for a UE related to the same data session across two 3GPP 5G access networks, depending on operator policy. Based on the connection conditions of the two access networks (e.g., radio characteristics, mobility, congestion) and the UE's movement speed, the 5G system may optimally distribute user traffic between the two access networks.

When two 5G access networks are used simultaneously for the same data session, the 5G system may collect charging information for both links simultaneously.

Note that when the two 5G access networks belong to different PLMNs, single subscription and data anchoring to the HPLMN 5G CN are assumed.

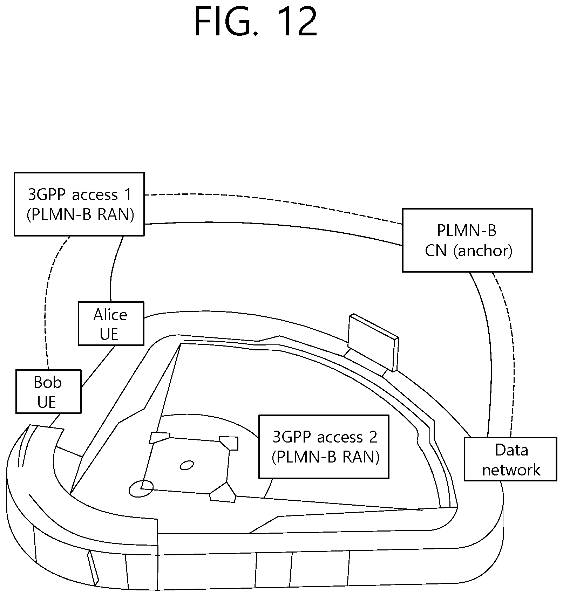

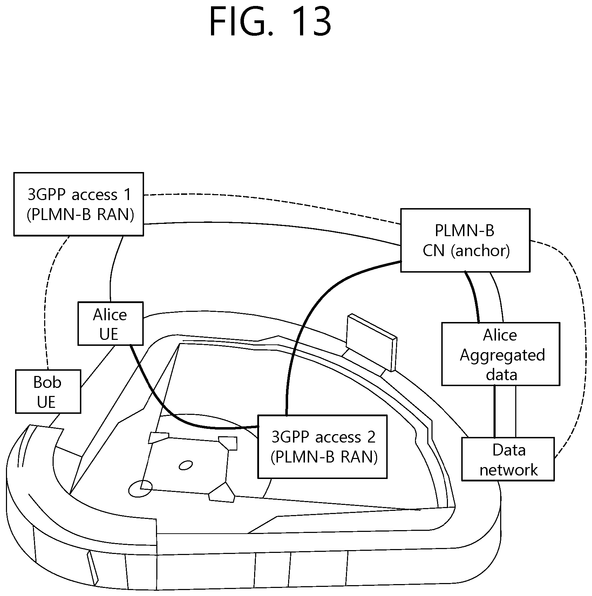

Below, with reference to FIG. 12 and FIG. 13, we describe the use case for the PLMN-to-PLMN scenario or the PLMN-SNPN scenario.

This example scenario depicts a scenario used in a stadium where an ad-hoc/in-venue 5G NR deployment (high-capacity) is provided by one SNPN or PLMN network (MNO-A), and 5G NR coverage is provided by another PLMN (MNO-B) outside the stadium. There is no network sharing between the two 5G networks. Here, MNO stands for Mobile Network Operator.

The above example may similarly apply to other regional business sites such as campuses, enterprises, shopping malls, and factories.

MNO-B has a business and roaming partnership with MNO-A that includes a contract to lease additional capacity (from MNO-A) to provide an ultra-broadband experience to certain MNO-B premium customers (e.g., "golden" customers). The agreement between MNO-A and MNO-B includes the capability to allow MNO-B users' data traffic to utilize additional NR connection links in PLMN-A, enabling connection at faster data speeds (including anchoring and aggregation to the CN in HPLMN). These capabilities are assumed to be supported by the CNs of both PLMNs and the UE (of the golden MNO-B user), and are associated with a set of traffic policies and conditions negotiated by the MNOs. These capabilities may be controlled and configured by the HPLMN and provisioned (to UE and CN entities).

Examples of preconditions related to this use case are as follows.

Alice and Bob have come to the stadium to see a concert by their favorite singer. Alice is a golden subscriber of MNO-B, and Bob is a "regular" MNO-B customer. Referring to the examples in FIG. 12 and FIG. 13, Bob UE (Bob's UE) and Alice UE (Alice's UE) are shown.

Both UEs are camped on and registered on MNO-B's network and are in the Idle state. Alice's UE supports dual (NR) radio.

Alice's specific traffic policy, part of the MNO-B "Golden User" contract, includes dual access usage for high-quality video calls based on QoS or traffic type. Otherwise, Alice's UE must use MNO-B single access/link.

The service flows in FIGS. 12 and 13 are as follows:

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 12** **is an example of a single 3GPP access connectivity according to an embodiment of the present disclosure.**

Referring to FIG. 12, Bob UE and Alice UE are shown. In FIG. 12, both Bob UE and Alice UE connect to the data network in PLMN-B based on 3GPP Access 1.
1) Before the concert begins, Alice and Bob make voice calls to their best friends, describing the stadium atmosphere and promising to share concert videos later. Both use a single 3GPP access connection (via PLMN-B).

FIG. 12 illustrates an example of the Alice & Bob data session using a single 3GPP access connection, as per Step 1.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 13** **is an example of a dual 3GPP access connectivity according to an embodiment of the present disclosure.**

Referring to FIG. 13, Alice's UE uses both a connection based on 3GPP Access 1 and a connection based on 3GPP Access 2.

2) When the concert begins, Alice and Bob decide to start a video call (with friends) to share the real-time experience (high-quality video configuration). Alice's UE registers with NW-A and configures a dual access connection spanning both networks. Bob's UE continues to use single access via PLMN-B.

FIG. 13 illustrates Alice's data session scenario using dual 3GPP access connections according to Phase 2.

3) Alice and Bob end the video call and continue enjoying the concert.

According to the use case referenced in FIG. 12 and FIG. 13, Alice's video quality was significantly better than Bob's.

Examples of existing functions that partially or fully encompass the use case functionality are described.
A) Steps 2 and 3 include a feature called ATSSS (Access Traffic Steering, Switching, Splitting). A feature similar to the one described in this use case is supported by TS 25.301 V17.0.0 Section 5.3.2, but it is limited to 3GPP access and non-3GPP dual access.
B) Existing service requirements (e.g., TS 22.261 V19.3.0 S6.18 and S6.41) capture some general multi-NW connection requirements but do not fully address or satisfy specific target use cases and functionalities. For example, in prior arts, for users subscribed to a single operator, the use of multiple service networks operated by different operators is under the control of the home operator. For example, according to prior arts, when multiple operators provide the same service, the UE must preferentially receive the subscribed service from the home operator's network unless directed otherwise by the home operator's network. In this case, if the service is unavailable on the home operator's network (e.g., due to insufficient network coverage), the UE may receive the service from another operator's network. In prior arts, the QoS provided by a partner operator's network for the same service may vary depending on the agreement between the two operators and may differ from that provided by the home operator's network.

Examples of potential new requirements needed to support use cases are as follows.

A 5G system must be able to support mechanisms that coordinate, split, and switch a user plane traffic session for a UE across two 5G networks belonging to two different PLMN operators (one of which is the HPLMN), or between the HPLMN and an SNPN, for a single data session.

It is assumed that an HPLMN subscription is used to access both networks, data traffic is anchored to the HPLMN, and appropriate business agreements exist between the two network operators, including specific traffic routing policies based on geographic location, subscription, and traffic type.

This section describes examples of use cases for UEs utilizing terrestrial and satellite access.

Satellite access, known for its wide coverage, may enhance service availability in areas where terrestrial access network coverage or propagation conditions (e.g., multipath interference) are poor. When a high-speed moving UE requests real-time services such as IMS voice/video conferencing, it can be dual-connected to the 5G system simultaneously via terrestrial and satellite access. This enables the UE to receive continuous and stable service while minimizing the impact of terrestrial access network outages.

Eric is traveling to Saudi Arabia for a business trip. He takes the Haramain high-speed train, crossing 450 kilometers of desert at 300 km/h from Makkah to Madinah to visit a client. Even while traveling, he must handle urgent business via online video conference and resolve all issues before arrival.

An example of the prerequisite conditions is as follows.

TerrA's terrestrial access network provides good coverage in urban areas, suburban areas, and intermediate railway stops, but coverage is limited in rural areas and deserts between intermediate stops. Operator SatA's satellite access network (e.g., LEO) covers the entire country, and SatA may provide communication services independently. For reference, TerrA is a terrestrial network operator, and SatA is a satellite network operator.

Based on this agreement, TerrA may route, switch, or split the user's traffic to the SatA network's data path and may integrate it into TerrA's 5GC, considering SatA's service availability or coverage.

Eric's UE (e.g., mobile phone or wireless network card) is capable of dual 3GPP radio access, including satellite access, and is subscribed to the service-approved TerrA (PLMN NetA).

By default, only terrestrial access is enabled.

An example service flow is as follows.

Eric arrives at Makkah Train Station and activates the UE's satellite access while waiting to check in.

The UE registers with NetA based on service preferences (e.g., instant chat when terrestrial access is preferred, HD TV when satellite access is preferred) via terrestrial access and satellite access networks.

After Eric connects, the online video conference initially starts via the terrestrial access network. During the one-hour meeting, the UE's traffic autonomously steers, switches, or splits between the terrestrial and satellite network traffic paths with the assistance of TerrA's core network, converging at TerrA's core network to ensure the video conference proceeds without interruption.

Upon the train's arrival at its destination, Eric deactivates the satellite access function, and the UE updates its registration with NetA.

The postconditions related to the use case example are as follows: for example, the video conference completes smoothly without interruption. The user remains unaware of any path adjustments, switching, or splitting during the video conference.

Examples of existing features that partially or fully encompass the use case functionality are described as follows.

The 5G system shall support UEs with both multi-radio and single-radio capabilities.

The 5G system must support the capability to steer the UE to select a specific 3GPP access network according to operator policy.

Depending on operator policy, the 5G system may provide simultaneous data transmission over different access technologies (e.g., NR, E-UTRA, non-3GPP) to access one or more 3GPP services.

A UE may simultaneously use two or more access technologies. In this case, the 5G system must be able to optimally distribute user traffic by selecting one of the access technologies in use, considering factors such as service, traffic characteristics, radio characteristics, and the UE's movement speed.

The 5G system must support data transmission optimized for different access technologies (e.g., 3GPP, non-3GPP) for UEs accessing the network simultaneously via different connections.

Service continuity between 5G terrestrial access networks owned by the same operator or by another operator under contract, and 5G satellite access networks, must be supported by the 5G system.

Examples of potential new requirements needed to support use cases are as follows.

For example, a 5G system must support a mechanism that coordinates a user's traffic between different 3GPP access networks and core networks for a UE using dual 3GPP access, considering factors such as service preference, traffic characteristics, radio characteristics, and QoS. For example, the 5G system should support seamless service continuity by switching and splitting user traffic paths between different 3GPP access networks and core networks for UEs using dual 3GPP access (e.g., NR and satellite access), based on network availability, service preference, etc.

The above use cases show that services may be provided to the UE via two 3GPP accesses (or 3GPP access links). For example, the UE may receive services from two 3GPP accesses connected to a single CN (Core Network) (or from two 3GPP accesses belonging to the same network). Alternatively, the UE may receive services from two 3GPP accesses connected to different CNs (or from two 3GPP accesses belonging to different networks). Here, the network may be a PLMN or an NPN.

As previously described, a DualSteer Device may be a device having two subscriptions/SUPIs (Subscription Permanent Identifiers) sharing a subscription profile for the same operator. The DualSteer Device may be one UE or two UEs. For reference, the terms DualSteer Device, Dual Steer Device, and DualSteer Device may be used interchangeably in the present disclosure.

For cases where a device has dual subscriptions/SUPIs that are associated with each other, such as in a DualSteer device, the method by which the device registers and/or establishes PDU sessions has not been defined in the past.

In other words, it is necessary to define how a device such as a dual steering device performs registration for each subscription/SUPI for each 3GPP access. Furthermore, it is necessary to define how a PDU Session can be established based on each subscription/SUPI.

Various examples disclosed in the present disclosure describe specific methods for enabling a UE to receive dual steering services.

Furthermore, a PDU session may be established through two 3GPP accesses. For example, a PDU session established through two 3GPP accesses may be referred to as a Multi-Access (MA) PDU Session. Compared to MA PDU sessions established via 3GPP access and non-3GPP access according to prior arts, the MA PDU session of the present disclosure may be a PDU session established via two 3GPP accesses. For certain services, traffic may be steered, switched, and split via such MA PDU sessions. Additionally, for certain services, traffic may be transmitted via a PDU Session formed through a single 3GPP access.

Related to DualSteer, it is assumed that the UE has a single subscription. According to prior arts, the UE registered with only one 5G CN for the 3GPP access. However, to receive services over two 3GPP accesses, the UE may need to register with two 5G CNs. Alternatively, to receive services over two 3GPP accesses, one 5G CN may be used, but the UE may register separately with each 3GPP access.

Furthermore, when registered with two 5G CNs, selection and/or determination may be required regarding which 5G CN to form a PDU session with for a given service and which 5G CN to transmit traffic to.

### I. First Disclosure of the Present Disclosure

According to the first disclosure of the present disclosure, a method supporting dual steering comprises a combination of one or more of the following operations/configurations/steps.

According to the first disclosure of the present disclosure, dual steering may be supported. For example, dual steering may be applied to both a subscriber/subscription type having one subscription/SUPI for the same operator and a subscriber/subscription type having two subscriptions/SUPIs for the same operator.

In the latter case, a Dual steer service based on one UE may be provided, or a Dual steer service based on two UEs may be provided. If there are two UEs, these UEs are included in one DualSteer Device (i.e., the two UEs constitute one DualSteer Device), so it is assumed that the two UEs may perform information exchange, coordination, etc., between themselves.

This describes an example of a subscriber/subscription type holding two subscriptions/SUPIs for the same provider. In this case, these subscriptions/SUPIs(i.e., with association information) may be managed/stored in an associated manner.

For example, a network (e.g., UDM, UDR, etc.) may manage/store information for each subscription/SUPI regarding its associated counterpart subscription/SUPI (e.g., managed or stored as Associated subscription/SUPI, Paired subscription/SUPI, Related subscription/SUPI, Connected subscription/SUPI, subscription/SUPI for DualSteer, etc.). Alternatively, for two subscriptions/SUPIs, their mutual association based on identical identifier values may be managed/stored (e.g., DualSteer-SUPI, Subscription Identifier for DualSteer, Subscription Pairing Identifier, subscriber identifier, etc.). Or, subscription information for two subscriptions/SUPIs may be managed/stored within/under a single subscription information.

The identification information may be unique within the operator network where two subscriptions/SUPIs are subscribed. Furthermore, for each subscription/SUPI, information related to which is primary (or main, 1st, prime, or master) and which is secondary (or sub, 2nd) (e.g., correlation information between them) may also be managed/stored.

The UE(s) may also manage/store association information for the two subscriptions/SUPIs as described above. Furthermore, the UE(s) may manage/store correlation information for the two subscriptions/SUPIs as described above. The UE having the primary subscription/SUPI may be considered the primary UE, and the UE having the secondary subscription/SUPI may be considered the secondary UE.

Additionally, the UE may provide association information and/or correlation information for the two subscriptions/SUPIs to the network (e.g., to the AMF/PCF during registration, to the SMF during PDU Session formation, etc.).

Furthermore, the NF may obtain the association information and/or the correlation information for the two subscriptions/SUPIs from another NF (e.g., AMF/SMF obtains from UDM, PCF obtains from UDR, etc.).

When the DualSteer Device includes two UEs, the association and information related to the association for the two subscriptions/SUPIs may be interpreted as the association and information related to the association for the two UEs. Alternatively, the correlation and information related to the correlation for the two subscriptions/SUPIs can be interpreted as the correlation and the information related to the correlation for the two UEs. Furthermore, the primary subscription/SUPI can be interpreted as the primary UE, and the secondary subscription/SUPI can be interpreted as the secondary UE.

In this specification, the terms "UE" (User Equipment) and "terminal" may be used interchangeably.

In the present disclosure, the terms "Subscriber" and 'User' may be used interchangeably.

In the present disclosure, the terms "network," "Core Network (CN)," "5G CN," "3GPP network," and "3GPP system" may be used interchangeably.

In the present disclosure, Home Network, Subscribed Network, and Non-roaming Network may be used interchangeably.

In the present disclosure, Visited Network, Non-subscribed Network, Roaming Network, and Non-home Network may be used interchangeably.

In the present disclosure, a network may include PLMN and NPN (Non-Public Network).

In the present disclosure, NPN may include both PNI-NPN (Public Network Integrated Non-Public Network) and SNPN (Stand-alone Non-Public Network), or may include only SNPN.

In the present disclosure, PLMN may be interpreted as including PNI-NPN.

In the present disclosure, a network identifier or network identification information may be a PLMN ID or a PLMN ID and NID (which is an SNPN ID).

In the present disclosure, 3GPP access may be 3GPP access based on the following RAT types defined in TS 29.571 V17.2.0. For example, 3GPP access may include or imply some or all of the following RAT types. RAT type may be used interchangeably with terms such as radio technology, access type, access link technology, RAT information, 3GPP access type/information, or 3GPP RAT type/information.

**[Table 3]**

| Enumeration value | Description |
|---|---|
| "NR" | New Radio |
| "EUTRA" | (WB) Evolved Universal Terrestrial Radio Access |
| "WLAN" | Untrusted Wireless LAN (IEEE 802.11) access |
| "VIRTUAL" | Virtual (NOTE 1 applies) |
| "NBIOT" | NB IoT |
| "WIRELINE" | Wireline access |
| "WIRELINE_CABLE" | Wireline Cable access |
| "WIRELINE_BBF" | Wireline BBF access |
| "LTE-M" | LTE-M (NOTE 2 applies) |
| "NR U" | New Radio in a non-licensed band |
| "EUTRA_U" | (WB) Evolved Universal Terrestrial Radio Access in unlicensed bands |
| "TRUSTED_N3GA" | Trusted Non-3GPP access |
| "TRUSTED_WLAN" | Trusted Wireless LAN (IEEE 802.11) access |
| "UTRA" | UMTS Terrestrial Radio Access |
| "GERA" | GSM EDGE Radio Access Network |
| "NR_LEO" | NR (LEO) satellite access type |
| "NR_MEO" | NR (MEO) satellite access type |
| "NR_GEO" | NR (GEO) satellite access type |
| "NR OTHER SAT" | NR (OTHERSAT) satellite access type |
| "NR REDCAP" | NR RedCap access type (see NOTE 3) |
| NOTE 1: Virtual is used when N3IWF is unaware of the access technology employed for untrusted non-3GPP connections. | |
| NOTE 2: This RAT type value is used only in the core network and is used when a Category M UE using E-UTRA provides Category M indication to the NG-RAN. | |
| NOTE 3: This RAT type value is used only in the core network and is used only when an UE using NR with reduced radio capabilities provides it to the NG-RAN. | |

Table 3 shows an example of Enumeration: RatType. The present disclosure may be based on the RAT type according to the example in Table 3.

However, the RAT type according to the example in Table 3 is merely an example. The scope of the present disclosure is not limited to the RAT type in Table 3. The RAT type according to the scope of the present disclosure may be divided into various forms, more granular forms, or multiple levels. For example, in the case of NR, the RAT type may be divided into FR (Frequency Range) 1 and FR 2. Another example for NR is that the RAT type may be further subdivided into TN (Terrestrial Network) and NTN (Non-Terrestrial Network). Alternatively, for NR, the RAT type may first be divided into TN and NTN, and then, if the RAT type is NTN, it may be further subdivided into GEO (Geosynchronous Orbit), MEO (Medium Earth Orbit), LEO (Low Earth Orbit), etc.

In the present disclosure, 3GPP access may be used as a term synonymous with 3GPP RAT.

In the present disclosure, service, application, and traffic may be used as terms synonymous with each other.

In the present disclosure, URSP and URSP rule(s) may be used as terms synonymous with each other.

In the present disclosure, for dual steer (or for a UE to receive dual steer services or to transmit and receive traffic in dual steer mode), the UE must be connected to two 3GPP accesses. At this time, the base stations for the two 3GPP accesses may be the same or different, and the CNs for the two 3GPP accesses may be the same or different. Furthermore, when the CN for the two 3GPP accesses is the same, the serving AMF may be the same or different.

In the present disclosure, Multi-Access (MA) may be used interchangeably with terms such as Dual-Access (DA), Dual Steer (DS), Dual Steering, Dual 3GPP Access, and Multi 3GPP Access.

In the present disclosure, the term Multi-Access (MA) PDU Session may be used interchangeably with Dual-Access (DA) PDU Session, Dual Steer (DS) PDU Session, Dual Steering PDU Session, Dual 3GPP Access PDU Session, Multi 3GPP Access PDU Session, and other equivalent terms.

An MA PDU Session may mean "A PDU Session that provides a PDU connectivity service, which can use one 3GPP access network at a time, or simultaneously two 3GPP access networks."

Alternatively, MA PDU Session can be interpreted as two associated PDU sessions or two paired PDU sessions. It may be interpreted as MA PDU Session/DualSteer being implemented/realized using two PDU sessions. For example, Associated PDU Sessions, Related PDU Sessions, Connected PDU Sessions, Paired PDU Sessions, or Dual Steered PDU Sessions may be used.

Hereinafter, descriptions of content identical to the prior arts are omitted. The focus is on explaining the content proposed in the present disclosure. For operations and procedures related to 5G systems, Registration, PDU Session, Multi-Access (MA) PDU Session, URSP, Steering of Roaming, and related operations and procedures are fundamentally referenced in TS 23.501 V18.0.0, TS 23.502 V18.0.0, TS 23.503 V18.0.0, and TS 23.122 V18.0.0.

In the approach proposed in the present disclosure to support Dual steering, the CN is described primarily as a 5G CN, but this is merely an example. The present disclosure may also apply to cases where the CN is an EPC or to core networks based on next-generation mobile communications such as 6G and beyond.

### 1. Example 1-1

### Example 1-1 describes an example of network information related to Dual Steer.

Network information related to Dual Steer may be configured or provided to a UE or a DualSteer Device. The network information related to Dual Steer may also be referred to as Dual Steer-related policy information.

A Dual Steer service based on two subscriptions/SUPIs may be provided. In this case, the network information related to Dual Steer may be configured or provided for both subscriptions/SUPIs. Alternatively, the network information related to Dual Steer may be configured or provided only for the primary subscription/SUPI. When a Dual Steer service based on two UEs is provided, the network information related to the Dual Steer may be configured/provided for both UEs. Alternatively, the network information related to the Dual Steer may be configured/provided only for the primary UE. The description concerning the network information related to the Dual Steer may apply throughout the present disclosure.

In the present disclosure, the term "Dual Steer" may be used interchangeably with "Dual Registration" or "Dual 3GPP access." Furthermore, references to Dual Steer (or its support, provision, availability, service, or use) may be interpreted as referring to Dual Registration (or its support, provision, availability, service, or use) or Dual 3GPP access (or its support, provision, availability, service, or use). This may apply throughout the present disclosure.

Network information related to Dual Steer may include one or more of the following items (e.g., I through V):

### I) Information for the two networks for which Dual Steer is provided/available:

This information may be structured as a mapping between information for the first network and information for the second network. Alternatively, this information may be structured as a list/set of information for the second network for each piece of information for the first network. This information may also be information that considers/reflects priority/preference. Here, priority/preference may be expressed in various forms, such as including priority/preference values or including information in order of priority. This may be applied throughout the present disclosure.

In this information, the information for each network (e.g., each of the two networks) may include the network's identification information. Furthermore, the information for each network (e.g., each of the two networks) may optionally include the 3GPP access(es) available/accessible on each network. If there are multiple 3GPP accesses, this information may also reflect priority/preference.

The first network and the second network may be the same network or different networks. If the first network and the second network are the same network, the network identification information may include only one.

This information may be configured considering/reflecting that it applies to a specific location and/or time.

For example, if the information about the two networks for which the Dual Steer is provided/available is in a mapping form, this information may be configured as mappings (a mapping list) as follows:
- Mapping between (PLMN#1, NR) and (SNPN#a, NR),
- Mapping between (PLMN#1, NR) and (PLMN#2, LEO),
- Mapping between (SNPN#b, NR) and (SNPN#c, GEO),
- Mapping between (PLMN#3, NR) and (PLMN#3, EUTRA), .. etc.

For example, if the information about the two networks where Dual Steer is provided/available is in list/set form, this information may be structured as a list/set as follows:
- a list for (PLMN#1, NR): (SNPN#a, NR), (PLMN#2, LEO),
- a list for (SNPN#a, NR): (PLMN#1, NR),
- a list for (PLMN#2, LEO): (PLMN#1, NR),
- a list for (SNPN#b, NR): (SNPN#c, GEO),
- a list for (SNPN#c, GEO): (SNPN#b, NR),
- a list for (PLMN#3, NR): (PLMN#3, EUTRA),
- a list for (PLMN#3, EUTRA): (PLMN#3, NR), .. etc.

Information for the two networks for which Dual Steer is provided/available may be structured as information indicating that one or more of the two networks is a Home Network and information indicating that both networks are Visited Networks. The distinction between the Home Network and the Visited Network may be explicit or implicit, and this applies throughout the present disclosure.

The information for the two networks for which the Dual Steer is provided/available may explicitly or implicitly include the following information. For example, the information for the two networks for which the Dual Steer is provided/available may include whether the information for each network (i.e., the first network, the second network) is valid, allowed, or preferred only for the primary subscription/SUPI, whether the information for each network (i.e., the first network, the second network) is valid, permitted, or preferred only for the secondary subscription/SUPI, or whether the information for each network (i.e., the first network, the second network) is valid, permitted, or preferred for both subscriptions/SUPIs.

II) Information for the network registered by the UE (e.g., the UE's first (serving) network) and the second network where Dual Steer is provided/possible/available:
The information may be determined based on the UE's first (serving) network (network identification information and/or the 3GPP access accessed by the UE). Additionally, for this information, the UE's location, mobility, movement pattern, movement direction, capability (e.g., the type of 3GPP access available to the UE, etc.) may also be considered.

The information may be information for the second network. Alternatively, the information may be configured as a mapping between information for the first network and information for the second network. Alternatively, this information may be configured as a list of information for the second network appended to information for the first network. Alternatively, the information may be information that considers/reflects priority/preference.

The information for each network may include the network's identification information and, optionally, the 3GPP access(es) available for access on each network. If there are multiple 3GPP accesses, the information may also consider/reflect priority/preference.

The first network and the second network may be the same network or different networks. If the first network and the second network are the same network, one network identification information may be included. Alternatively, the identification information for the second network may not be included.

The information may be configured considering/reflecting its application to a specific location and/or time.

For example, if a UE registers with PLMN#1 via NR, information for a second network where Dual Steer is provided/available can be configured as (SNPN#a, NR), (PLMN#2, LEO) and may be provided to the UE.

Information for the network to which the UE is registered (e.g., the UE's first (serving) network) and the second network for which Dual Steer is provided/possible/available may be structured as two separate pieces of information as follows. For example, the information may be divided into information indicating that one or more of the two networks is the Home Network (or information indicating that one or more of the two networks corresponds to the Home Network) and information indicating that both networks are Visited Networks (or information indicating that both networks correspond to Visited Networks).

When Dual Steer service is provided through two subscriptions/SUPIs, information for the second network may be configured based on the subscription/SUPI registered by the UE. For example, information for the second network may be configured based on a subscription/SUPI that has not yet been registered.

Dual steer service can be provided through two UEs. In this case, while the first UE performs the registration procedure, capability information for the second UE (e.g., available 3GPP access types) may be provided to the network. The capability information for the second UE may also be utilized when configuring the information for the second network.

The UE may attempt registration first/priority via the primary subscription/SUPI. Registration may be attempted based on the device/UE's configuration, or based on implementation or network instructions/settings.

III) Information for networks where Dual Steer is provided/available:
The information may be information that considers/reflects priority/preference.

The information for the network may include network identification information. The information for the network may also include, as optional information, the 3GPP access(es) available in each network. If there are multiple 3GPP accesses, the information for the network may also be information that considers/reflects priority/preference.

The information may be structured considering/reflecting its applicability to specific locations and/or times.

For example, the information for the network where the Dual Steer is provided/available may be structured as a list as follows:
- (PLMN#1, NR),
- (SNPN#a, NR),
- (PLMN#2, LEO),
- (SNPN#b, NR),
- (SNPN#c, GEO),
- (PLMN#3, NR),
- (PLMN#3, EUTRA), .. etc.

Information for the network where the Dual Steer is provided/available may be categorized into information for the Home Network and information about the Visited Network.

Dual Steer service may be provided through two subscriptions/SUPIs. In this case, the information for the network where Dual Steer is provided/available may be configured/set/provided per each subscription/SUPI. Furthermore, the information for the networks where Dual Steer is provided/available may explicitly or implicitly include the following information. For example, it may incldue whether each information is valid, permitted, or preferred only for the primary subscription/SUPI, whether each information is valid, permitted, or preferred only for the secondary subscription/SUPI, or whether each information is valid, permitted, or preferred for both subscriptions/SUPIs.

IV) Information indicating that the use of Dual Steer is authorized/allowed/available

V) Information for DNN and/or S-NSSAI/slice where Dual Steer can be provided

The network information related to Dual Steer described above based on various examples (e.g., information I through V) may also be configured/provided together with valid time information and/or area/location information. For example, the area/location information may be in various forms such as cell information, TA (Tracking Area) information, base station information, geo-area information, address information, etc. This applies throughout the present disclosure.

Within the network information related to the Dual Steer, information for whether each network supports Dual Steer or Dual Registration may also be configured/provided. This support status may be expressed as supported/not supported, or it may be expressed as supported only for supported networks and not supported only for unsupported networks. The fact that the network supports Dual Steer or Dual Registration may, for example, be interpreted as meaning that the network's AMF supports the Dual Steer or Dual Registration feature.

The method/procedure by which network information related to Dual Steer is configured or provided to the UE may vary. For example, one or more of the methods/procedures listed below in 1) to 5) may be used. When receiving Dual Steer service via two subscriptions/SUPIs, the configuration/provisioning according to 1) to 5) below may consider/reflect primary subscription/SUPI and/or secondary subscription/SUPI information, or may be based on such correlation information:
1) Network information related to Dual Steer may be configured (e.g., pre-configured) in the UE.
2) Based on the SoR (Steering of Roaming) procedure, network information related to Dual Steer may be provided to the UE:

For example, the UDM may provide the information to the UE. For the SoR procedure, refer to Annex C (normative): Control plane solution for steering of roaming in 5GS of TS 23.122 V18.0.0. Instead of using the SoR procedure itself, a similar procedure may be defined and used.

When using the SoR procedure, the UDM may also provide the SoR AF with various information required to generate/configure/update the network information related to the Dual Steer. For example, the various information may include: information for the network/access registered by the UE or DualSteer Device; association information between the DualSteer Device's two subscriptions/SUPIs; correlation information between the DualSteer Device's two subscriptions/SUPIs; information for whether the UE or DualSteer Device uses/allows DualSteer; and/or location information of the UE or DualSteer Device.

Alternatively, the SoR AF may directly request information for the terminal from the UDM. Information directly requested by the SoR AF may include, for example: information for the network/access registered by the UE or DualSteer Device; association information between the two subscriptions/SUPIs of the DualSteer Device; correlation information between the two subscriptions/SUPIs of the DualSteer Device; information for whether the UE or DualSteer Device uses or permits DualSteer; and/or location information of the UE or DualSteer Device. The SoR AF may request this information from the UDM and receive it from the UDM. This means that when the SoR AF requests a subscription for the terminal from the UDM, the UDM may provide the Information related to DualSteer to the SoR AF along with it, or the SoR AF may directly request the Information related to DualSteer from the UDM.

3) Based on the UE policy delivery procedure, network information related to Dual Steer may be provided to the UE:
For example, the PCF (particularly the UE policy PCF or UE PCF) may provide the information to the UE. For the UE policy delivery procedure, refer to TS 23.502 V18.0.0, Section 4.2.4.3 UE Configuration Update procedure for transparent UE Policy delivery. The operation of providing network information related to Dual Steer through the UE policy delivery procedure may be performed after the UE has completed the registration procedure. Alternatively, the operation of providing network information related to Dual Steer through the UE policy delivery procedure may be performed based on the UE requesting the network information related to Dual Steer.

4) Based on the Registration procedure, network information related to Dual Steer may be provided to the UE:
For example, the AMF may provide the network information related to Dual Steer to the UE. Regarding the Registration procedure, reference may be made to the registration procedure based on FIGS. 5 and 6.

5) The network information related to Dual Steer may be provided to the UE based on the UCU (UE Configuration Update) procedure:
For example, the AMF may provide the UE with network information related to Dual Steer based on the UCU procedure. For the UCU procedure, refer to TS 23.502 V18.0.0, Section 4.2.4.2 UE Configuration Update procedure for access and mobility management related parameters.

As described above, one or more of the procedures 1) through 5) may be performed.

The timing/point at which network information related to Dual Steer is configured or provided to the UE or DualSteer Device may vary. Based on one or more of the following cases/timing points, network information related to Dual Steer may be configured or provided to the UE or DualSteer Device. However, the timing points and/or cases below are merely examples, and the scope of the present disclosure is not limited by them. For example, if the network determines that it needs to update/provide network information related to Dual Steer to the UE or DualSteer Device, it may provide the network information related to Dual Steer to the UE:
a) When the UE or DualSteer Device performs a registration procedure:
   The registration procedure may include all or some of the forms/types of registration procedures listed in TS 23.502 V18.0.0 Section 4.2.2.2.1 General, such as Initial Registration, Mobility Registration Update, Periodic Registration Update, and registration procedures based on FIGS. 5 and 6.
b) When a serving network is created or added for the UE or DualSteer Device
c) When the serving network for the UE or DualSteer Device is changed
d) When the serving network for the UE or DualSteer Device is deregistered or removed
e) When 3GPP access for the UE or DualSteer Device is created or added
f) When the 3GPP access of the UE or DualSteer Device changes
g) When the 3GPP access of the UE or DualSteer Device is removed
h) When a handover of the UE or DualSteer Device is performed
i) When a Service Request is performed by the UE or DualSteer Device
j) When the location information of the UE or DualSteer Device changes

The following describes examples of various information/reasons why a network provides UE or DualSteer Device with network information related to Dual Steer.

For example, the network may provide the UE or DualSteer Device with network information related to Dual Steer based on various information/reasons. Information and/or reasons such as the examples below may apply, but these are merely examples. The scope of the present disclosure is not limited by the following information and/or reasons:
i) The UE informs the network that the UE supports Dual Steer:
   The UE may inform the network of its Dual Steer support at various points and in various forms. For example, the UE may inform the AMF and/or PCF and/or UDM of its Dual Steer support during registration or after registration. If the UE informs only the AMF, the AMF may relay this information to the PCF. Additionally, the AMF may provide the information received from the UE to the UDM. The UE Policy container may be used for the UE to inform the PCF. The SoR container may be used for the UE to inform the UDM that the UE supports Dual Steer. This may apply throughout the present disclosure. The UE may inform the network that the UE supports Dual Steer based on network information related to the Dual Steer. The network may also inform the UE that it supports Dual Steer.
ii) The UE requests the network to provide information related to Dual Steer.
   The UE may request this information from the network at various times and in various forms. For example, the UE may notify the AMF and/or PCF during or after registration. The UE may also request the network to provide information related to Dual Steer based on the aforementioned Dual Steer network information. The network may inform the UE that the network can provide the network information related to Dual Steer.
iii) The UE informs the network of its intent to perform Dual Registration or requests dual registration.
   At various points in time and in various forms, the UE may inform the network of the UE intends to perform Dual Registration or request Dual Registration. For example, the UE may inform the AMF and/or PCF during or after registration. The UE may also inform the network of its intent to perform Dual Registration or request it based on network information related to the aforementioned Dual Steer. The network may inform the UE that the network can perform Dual Registration.
iv) Subscription information:
   Subscription information may be related to Dual Steer. For example, subscription information may include one or more of the following: information indicating that the Dual Steer service can be provided, information indicating that the Dual Steer service is authorized/allowed, DNN and/or S-NSSAI/slice information for which Dual Steer can be provided, information indicating Gold/premium subscriber status, information for the association between two subscriptions/SUPIs when receiving the Dual Steer service through two subscriptions/SUPIs, and information for the correlation between two subscriptions/SUPIs when receiving the Dual Steer service through two subscriptions/SUPIs, etc. However, the scope of the present disclosure is not limited thereto. Subscription information may be stored in NFs such as UDM or UDR.
v) Local policy, operator policy, local configuration, etc., configured in the network or NF (Network Function).
vi) SLA (Service Level Agreement) with other networks capable of providing Dual Steer.
vii) Location information of the UE or DualSteer Device.
viii) Time information.

Based on the various examples i) through viii) above, the network may provide the UE or DualSteer Device with network information related to Dual Steer.

The information in i) through iii) may be interpreted as the UE's capability information related to Dual Steer. Alternatively, the information in i) through iii) may be provided because the UE has Dual Steer capability.

Network information related to Dual Steer may be transmitted to the terminal based on the terminal's capability. After receiving separate information that the network permits/authorizes dual registration to the terminal, the terminal may perform dual registration based on the network information related to Dual Steer.

For example, after the network transmits network information related to Dual Steer to the terminal, when specific conditions (e.g., when the terminal moves to a specific area) are satisfied, the network may transmit information indicating that the network allows/authorizes the terminal to perform dual registration, considering subscription information and other factors.

After the UE registers with the first network, it may register with the second network based on network information related to Dual Steer. When the Dual Steer service is provided using two UEs, after the first UE registers with the first network, the second UE may register with the second network based on network information related to Dual Steer.

The operation/procedure for the UE (or the second UE) to register with the second network may include the operation/procedure of determining/selecting the second network based on network information related to Dual Steer. Furthermore, the operation/procedure for registering with the second network may include an operation for determining/selecting the 3GPP access of the second network based on the network information related to Dual Steer, and an operation/procedure for selecting the access or performing cell selection.

The first network and the second network may be the same network or different networks. In the former case, registering with the second network may mean registering with the first network, i.e., the same network. In this case, the serving AMF for the two registrations may be the same or different. Registering with the second network may involve performing the registration procedure or performing the procedure (newly defined procedures and/or NAS messages) for adding a second (serving) network/3GPP access. Registering via two 3GPP accesses/networks may be referred to as dual registration. This term may be applied throughout the present disclosure.

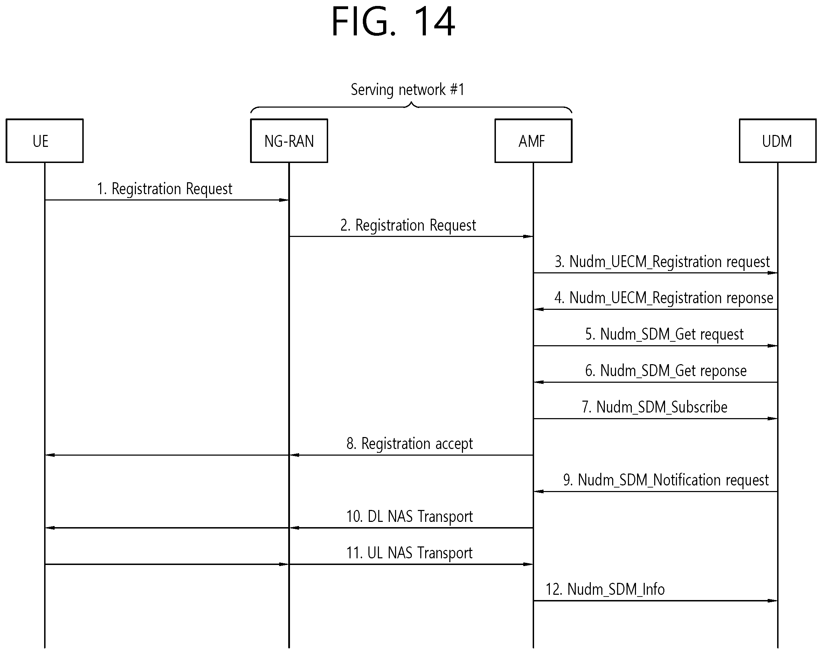

Hereinafter, with reference to FIG. 14, a first embodiment of the first disclosure of the present disclosure is described.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 14** **shows the first embodiment of the first disclosure of the present disclosure according to one embodiment of the present disclosure.**

FIG. 14 illustrates an example of the first embodiment using the SoR (Steering of Roaming) procedure to provide the UE with network information related to Dual Steer. Hereinafter, the present disclosure describes the proposed content/matters, focusing on the registration procedure according to FIGS. 5 and 6 and the differences from the SoR procedure (refer to Annex C (normative): Control plane solution for steering of roaming in 5GS of TS 23.122 V18.0.0).

For reference, in the example of FIG. 14, Serving Network#1 could be either the Home Network or the Visited Network.

1~2. The UE initiates the Registration procedure to the first network via the first 3GPP access. For example, the UE transmits a Registration Request message. At this time, the UE may include one or more pieces of information from i) to iii) in the Registration Request message.

3. The AMF registers with the UDM. At this time, the AMF may provide the RAT type for the first 3GPP access as part of the 3GPP access information to the UDM. The UDM may store the RAT type. The AMF may also provide the UDM with one or more pieces of information from i) to iii) provided by the UE.

4. The UDM responds to the AMF's registration.

5~6. The AMF may obtain subscription information from the UDM.

7. The AMF may subscribe to a UDM service to receive/be notified of changes to subscription information.

8. The AMF transmits a Registration Accept message to the UE.

9. The UDM may determine to provide network information related to Dual Steer to the UE. To do so, the UDM may transmit network information related to Dual Steer to the AMF. The network information related to Dual Steer may be part of the SoR information or may be separate information.

10. The AMF may transmit the network information related to Dual Steer received from the UDM to the UE.

11. If the UDM requests an acknowledgment, the UE may transmit an acknowledgment.

12. The AMF can transmit the acknowledgment from the UE to the UDM.

The UE may determine that the UE can register with the second network based on the network information related to the Dual Steer. When the Dual Steer service is provided using two UEs, the second UE may determine that the UE can register with the second network based on the network information related to the Dual Steer acquired by the first UE.

FIG. 14 may also be applied to a method of providing network information related to Dual Steer to the UE using the Registration procedure. In this case, steps 9 to 12 need not be performed. Furthermore, when network information related to Dual Steer is provided to the UE through step 8, the UE may need to transmit a Registration Complete message to the AMF as a response/Ack.

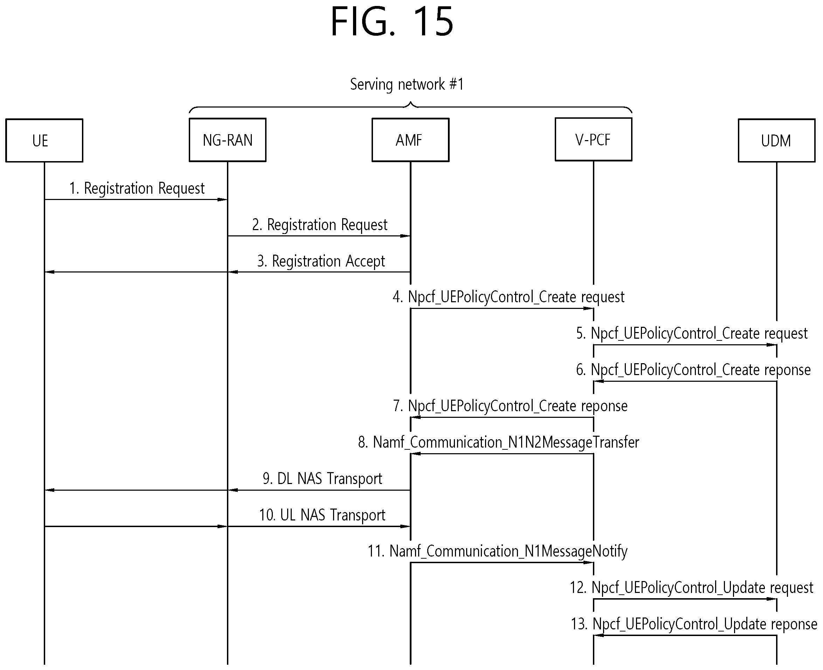

Hereinafter, with reference to FIG. 15, a second embodiment of the first disclosure of the present disclosure is described.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 15** **shows the second embodiment of the first disclosure of the present disclosure according to one embodiment of the present disclosure.**

According to the second embodiment illustrated in FIG. 15, network information related to Dual Steer may be provided to the UE using the UE policy delivery procedure. Hereinafter, the present disclosure describes the proposed content/matters, focusing on the differences between the registration procedure according to FIGS. 5 and 6 and the UE policy delivery procedure (refer to 4.2.4.3 UE Configuration Update procedure for transparent UE Policy delivery in TS 23.502).

In the example of FIG. 15, Serving Network#1 may be either the Home Network or the Visited Network. If it is the Home Network, the V-PCF is not involved.

1~2. The UE initiates the Registration procedure with the first network via the first 3GPP access. For example, the UE transmits a Registration Request message. At this time, the UE may include one or more of information from i) to iii) in the Registration Request message. Specifically, to provide the information to the PCF, the UE may include the one or more of information from i) to iii) in the UE Policy Container included in the Registration Request message.

3. The AMF sends a Registration Accept message to the UE.

4~5. The AMF performs UE Policy Association with the PCF. At this time, the RAT type for the first 3GPP access may be provided to and stored by the PCF as part of the 3GPP access information.

6~8. UE Policy Association between the AMF and PCF is completed.

The (H-)PCF may also decide to provide network information related to Dual Steer to the UE. To do so, the (H-)PCF may send a message including the aforementioned information to the AMF. For example, if Serving Network#1 is the Visited Network, the information may be transmitted to the AMF via steps 6 and 8; if Serving Network#1 is the Home Network, the information may be transmitted to the AMF via step 8. The network information related to Dual Steer may be referred to as the Dual Steer Policy, Dual Steer UE Policy, etc.

9. The AMF may transmit network information related to the Dual Steer received from the PCF (i.e., the Dual Steer UE Policy) to the UE.

10. The UE may update/store the UE policy provided by the PCF and transmit the result or response to the AMF.

11~13. The AMF may transmit the result/response from the UE to the PCF.

The UE may determine that the UE can register to the second network based on the network information related to the Dual Steer. When receiving the Dual Steer service using two UEs, the second UE may determine that it can register with the second network based on the network information related to the Dual Steer acquired by the first UE.

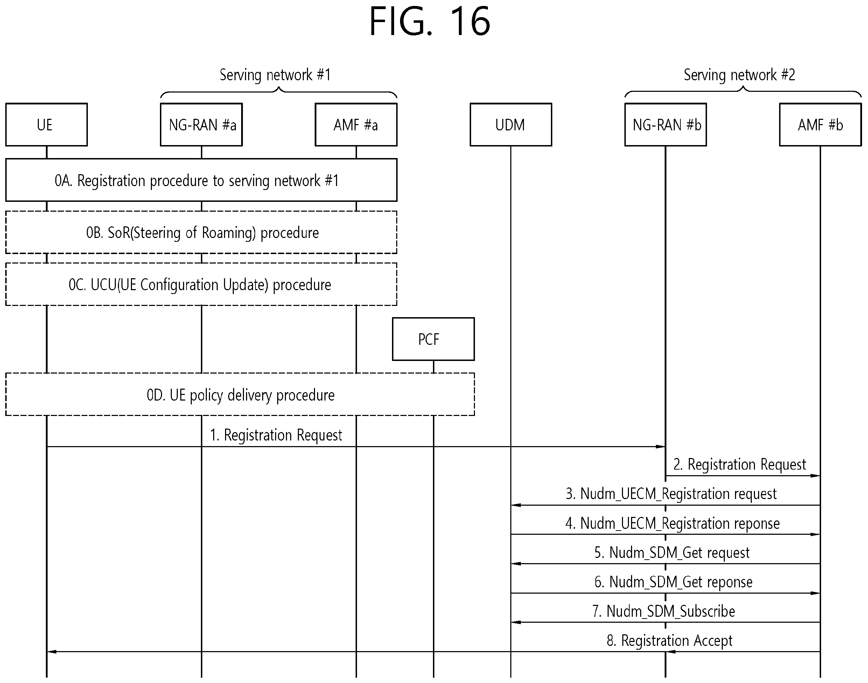

Hereinafter, with reference to FIG. 16, the third embodiment of the first disclosure of the present disclosure is described.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 16** **shows the third embodiment of the first disclosure of the present disclosure according to one embodiment of the present disclosure.**

The third embodiment illustrates an example where the UE registers with the second network based on network information related to Dual Steer. When the Dual Steer service is provided using two UEs, the third embodiment may be interpreted as the second UE registering with the second network based on network information related to Dual Steer acquired by the first UE.

Below, the contents/matters proposed in the present disclosure are described, focusing on the differences from Registration procedure according to FIG. 5 and FIG. 6 (see TS 23.502, Section 4.2.2.2.2 General Registration), SoR procedure (see TS 23.122, Annex C (normative): Control plane solution for steering of roaming in 5GS), UCU procedure (TS 23.502, 4.2.4.2 UE Configuration Update procedure for access and mobility management related parameters), UE policy delivery procedure (TS 23.502, 4.2.4.3 UE Configuration Update procedure for transparent UE Policy delivery).

In the example of FIG. 16, both Serving Network#1 and Serving Network#2 may be Home Networks, or both may be Visited Networks. Alternatively, one serving network may be a Home Network while the other is a Visited Network. The two serving networks may be the same (i.e., one) network or they may be different networks.

In the example of FIG. 16, NG-RAN#a and NG-RAN#b may be the same NG-RAN or different NG-RANS. Furthermore, AMF#a and AMF#b may be the same AMF or different AMFs.

0A. The UE performs the registration procedure via the first 3GPP access and the first network.

The UE may also receive network information related to Dual Steer through the registration procedure.

0B. The UE may also receive network information related to Dual Steer based on the SoR procedure.

0C. The UE may also receive network information related to Dual Steer through the UCU procedure.

0D. The UE may also receive network information related to Dual Steer through the UE policy delivery procedure.

1~2. The UE initiates the registration procedure to the second network via the second 3GPP access based on the network information related to Dual Steer.

When receiving Dual Steer service using two UEs, the second UE may also initiate the registration procedure to the second network via the second 3GPP access based on the network information related to Dual Steer acquired by the first UE through step 0.

3. The AMF performs a register to the UDM. At this time, the RAT type for the second 3GPP access may be provided to and stored by the UDM as part of the 3GPP access information.

4. The UDM responds to the AMF's register.

5~6. The AMF can obtain subscription information from the UDM.

7. The AMF may subscribe to the UDM service to receive/be notified of changes to subscription information.

8. The AMF sends a Registration Accept message to the UE.

### 2. Example 1-2

Example 1-2 describes an example of URSP information for a UE or DualSteer Device that can receive services through two 3GPP accesses.

Describes URSP information (e.g., URSP information related to Dual Steer) for a UE or DualSteer Device that can receive services through two 3GPP accesses (or Dual 3GPP access). URSP information related to Dual Steer may indicate which 3GPP access/network a UE or DualSteer Device uses to receive a particular service (or for a particular Traffic Descriptor, or for a matching application, or for the traffic of a matching application) when registered on two 3GPP accesses/networks. URSP information related to Dual Steer may include one or more of the following:
- Information for whether an MA PDU Session can be established (or whether services can be received via an MA PDU Session, or whether traffic can be transmitted using two 3GPP access/networks, or whether services can be received using two 3GPP access/networks).
- Information for whether a PDU Session may be established via the first network (or whether services may be received via the first network's PDU Session, or whether traffic may be transmitted via the first network, or whether services may be received using the first network).

Information for whether a PDU Session can be established over the second network (or whether services can be received via the second network's PDU Session, or whether traffic can be transmitted over the second network, or whether services can be received using the second network).

Information for whether a PDU Session may be established via the first 3GPP access (or whether services may be received via the PDU Session of the first 3GPP access, or whether traffic may be transmitted via the first 3GPP access, or whether services may be received using the first 3GPP access).
- Information for whether a PDU Session may be established via the second 3GPP access (or whether services may be received via the PDU Session of the second 3GPP access, or whether traffic may be transmitted via the second 3GPP access, or whether services may be received using the second 3GPP access).
- Information for whether a PDU Session may be established via the first subscription/SUPI (or the first UE) (or whether services can be received via the first network's PDU Session, or whether traffic can be transmitted via the first network, or whether services can be received using the first network).
- Information for whether a PDU Session may be established via the second subscription/SUPI (or second UE) (or whether services may be received via the PDU Session of the first network, or whether traffic may be transmitted via the first network, or whether services may be received using the first network).
- Information for whether a PDU Session may be established via the primary subscription/SUPI (or primary UE) (or whether services can be received via the PDU Session of the first network, or whether traffic can be transmitted via the first network, or whether services can be received using the first network).
- Information for whether a PDU Session may be established via the secondary subscription/SUPI (or secondary UE) (or whether services can be received via the PDU Session of the first network, or whether traffic can be transmitted via the first network, or whether services can be received using the first network).

Regarding URSPs related to Dual Steer, existing URSPs may be used, or existing URSPs may be extended/modified. Alternatively, new UE policies related to Dual Steer may be defined (e.g., DualSteer UE policy, etc.).

The present disclosure collectively refers to them as URSP. When an existing URSP(refer to section 6.6.2 UE Route Selection Policy information of TS 23.503 V18.0.0) is extended/modified, one or more of the following parameters/information may be added to the RSD (Route Selection Descriptor) or the RSD itself may be extended/modified. Instead of utilizing the RSD, new Information/Descriptors may be defined and used. The parameters/information below may be added or extended/modified explicitly, implicitly, in combination, or in a phased manner. When Dual steer service is provided via two subscriptions/SUPIs, the parameters/information below may be configured by considering/reflecting primary subscription/SUPI and/or secondary subscription/SUPI information, or based on such correlation information. Furthermore, different parameters/information may be configured for the primary subscription/SUPI and the secondary subscription/SUPI. Additionally, different parameters/information may be configured for the primary UE and the secondary UE. One or more of the parameters/information, such as the examples below, may be added as RSD to the URSP related to Dual Steer:

### 1) Network preference is added to URSP:

Network preference may indicate whether it is preferred to transmit the matching application's traffic via the Home Network or via the Visited Network. Alternatively, Network preference may indicate whether the UE or Dual Steer Device prefers to establish a PDU Session for the matching application via the Home Network or via the Visited Network. If the UE or Dual Steer Device is not registered with the preferred Network, the other Network (e.g., the non-preferred network) may be used. For example, if the preferred network is VPLMN1 but the UE or Dual Steer Device is registered to VPLMN2, the network preference may indicate whether traffic can be transmitted via VPLMN2. In this example, VPLMN2 may represent the non-preferred network.

### 2) Visited Network preference is added to URSP:

The Visited Network preference may indicate whether it is preferred to transmit traffic for matching applications via the Visited Network. Alternatively, it may indicate whether it is preferred for the UE or Dual Steer Device to establish PDU sessions for matching applications via the Visited Network. If the UE or Dual Steer Device is only registered with the Home Network, the Home Network may be used.

### 3) Home Network preference is added to URSP:

Home Network preference may indicate whether it is preferred to transmit the matching application's traffic via the Home Network. Alternatively, it may indicate whether it is preferred for the UE or Dual Steer Device to establish a PDU Session for the matching application via the Home Network. If the UE or Dual Steer Device has only registered with the Visited Network, the Visited Network may be used.

### 4) Dual Steering preference is added to the URSP:

Dual Steering preference may indicate whether it is preferred to transmit the matching application's traffic via Dual Steering. Alternatively, Dual Steering preference may indicate whether it is preferred for the UE or Dual Steer Device to establish a PDU Session for the matching application using two MA PDU Sessions over two 3GPP accesses. If implementing MA PDU Session/DualSteer using two PDU Sessions, the Dual Steering preference may also be indicated via pairing information for the two PDU Sessions. For example, the PCF may inform the UE that it prefers creating an MA PDU session for dual steer by including pairing information in the URSP. For example, when the UE establishes a PDU session based on the URSP, the UE may inform the SMF and/or PCF that the PDU session is related to dual steer.

The pairing information for these two PDU Sessions may be used instead of Dual Steering preference information, or it may be used together with Dual Steering preference information. Related to the pairing information for the the PDU Sessions, the following methods may be used:
A. Identifier information, such as an identifier (e.g., an integer value), may be used. For example, each URSP rule for the two PDU Sessions may be configured to include the same pairing identifier. The UE (or each UE, if the Dual Steer Device includes two UEs) may provide the pairing identifier for the PDU Session to the SMF when creating the PDU Session. This allows the SMF/PCF to recognize that the two PDU Sessions are paired and implement/realize MA PDU Session/DualSteer.
B. The Network Slice Selection component(which corresponds to Either a single value or a list of values of S-NSSAI(s)) within the URSP rule's Route Selection component may be utilized. For example, each URSP rule for two PDU Sessions may be configured to include an S-NSSAI with the same Slice Differentiator (SD) value. For reference, S-NSSAI can be configured as follows (see TS 23.501 V18.0.0):
   - A Slice/Service Type (SST), it represents the expected network slice operation in terms of functionality and services;
   - A Slice Differentiator (SD), it is optional information that complements the slice/service type to distinguish multiple network slices of the same slice/service type.
   Based on the S-NSSAI of the PDU Session generated by the UE (each UE when the Dual Steer Device consists of two UEs), the SMF/PCF may recognize that the two PDU Sessions are paired and implement/realize the MA PDU Session/DualSteer.
C. The DNN Selection (which corresponds to Either a single value or a list of values of DNN(s)), within the Route selection component of the URSP rule, can be utilized. For example, each URSP rule for two PDU Sessions may include the same DNN. Based on the DNNs of the PDU Sessions generated by the UE(s) (each UE when the Dual Steer Device consists of two UEs), the SMF/PCF may recognize that the two PDU Sessions are paired and implement MA PDU Session/DualSteer.

When implementing MA PDU Session/DualSteer using two PDU Sessions, and when pairing information for the two PDU Sessions is managed using a pairing identifier, both scenarios may exist. For both of these cases, the UE may provide a pairing identifier for the PDU Session to the SMF when creating each PDU Session. This allows the SMF/PCF to recognize that the two PDU Sessions are paired and implement MA PDU Session/DualSteer. When pairing information for the two PDU Sessions is managed using S-NSSAI information (e.g., SD value), the SMF/PCF may recognize that the two PDU Sessions are paired with each other and implement MA PDU Session/DualSteer based on the S-NSSAI of each PDU Session created by the UE.

5) The existing Access Type preference is extended/modified: The existing Access Type preference is related to the description: "Indicates the preferred Access Type (3GPP or non-3GPP or Multi-Access) when the UE establishes a PDU Session for the matching application." . Regarding the Access Type preference, it may be made to indicate/point to the content described in 4) above.

6) 3GPP Access preference is added to URSP: This may indicate which 3GPP access(es) are preferred for transmitting the matching application's traffic. Alternatively, it may indicate which 3GPP access(es) are preferred for the UE or Dual Steer Device to establish PDU Sessions for the matching application. When multiple 3GPP accesses exist, the 3GPP Access preference may be information reflecting priority/preference. When multiple 3GPP accesses exist, one 3GPP access may be configured per RSD, and priority/preference may be reflected in the Route Selection Descriptor Precedence.

7) Preferred Network(s) is added to the URSP: Preferred Network(s) may be one or more network identifiers. Preferred Network(s) may indicate which network(s) are preferred for transmitting traffic for matching applications. Alternatively, Preferred Network(s) may indicate which network(s) the UE or Dual Steer Device prefers to establish a PDU Session for the matching application. If there are two network identifiers, Preferred Network(s) may mean establishing a MA PDU Session or transmitting matching application traffic through Preferred Network(s). Conversely, if only one network identifier is present, Preferred Network(s) may indicate establishing a PDU Session or transmitting matching application traffic over Preferred Network(s). If the UE or Dual Steer Device is not registered on the Preferred Network, the other network may be used.

When the Dual Steer service is provided using two subscriptions/SUPIs, the URSP related to Dual Steer may be configured/set up/provided for each subscription/SUPI. When the Dual Steer service is provided using two UEs, the URSP related to Dual Steer may be configured/set up/provided for each UE.

When Dual Steer service is provided using two subscriptions/SUPIs, information regarding which subscription/SUPI the URSP related to Dual Steer applies to/corresponds to (whether it applies to/pertains to the primary subscription/SUPI, the secondary subscription/SUPI, or all subscriptions/SUPIs) may be explicitly or implicitly included/expressed in each URSP rule. This information may be explicitly or implicitly included/expressed within the URSP itself (i.e., as equally applicable to all URSP rules provided/updated).

The PCF may configure, update, or generate URSP information related to Dual Steer in one or more of the following cases/timing (e.g., A) through E)). The PCF may then provide the updated URSP to the UE or Dual Steer Device. However, this is not limited to these cases; The PCF may configure, update, or generate URSP information when the PCF recognizes/detects a change in the location information of the UE or Dual Steer Device. When the Dual Steer Device includes two UEs, the following content may be interpreted as referring to either one UE or both UEs, depending on the context:
A) If a UE or Dual Steer Device registers with the first network, the PCF may configure/update/create URSP information related to Dual Steer:
   The UE or Dual Steer Device may provide Information related to Dual Steer (which may correspond to items i) to iii) in "1. Example 1-1") to the network (AMF and/or PCF). Accordingly, the PCF may also update the URSP related to Dual Steer information for the UE or Dual Steer Device.
B) If the UE or Dual Steer Device registers with a second network, or if a second serving network becomes available to the UE or Dual Steer Device, or if the UE or Dual Steer Device adds a second serving network, the PCF may configure/update/create URSP information related to Dual Steer:
   At this time, the UE or Dual Steer Device may provide Information related to Dual Steer (which may correspond to items i) to iii) in "1. Example 1-1") to the network (AMF and/or PCF). Accordingly, the PCF may update the URSP related to Dual Steer information for the UE or Dual Steer Device.
C) If one or more of the two serving networks of the UE or Dual Steer Device changes, the PCF may configure/update/generate URSP information related to Dual Steer.
D) If one or more of the two 3GPP accesses to which the UE or Dual Steer Device is connected changes, the PCF may configure/update/generate URSP information related to Dual Steer.
E) If one of the two serving networks for UE or Dual Steer Device is deregistered or removed, the PCF may configure/update/create URSP related to Dual Steer information.

Various information may be used to determine whether the PCF may update/provide URSP related to Dual Steer information to the UE or Dual Steer Device. For example, one or more of the following information may be used: the information i) to viii) in the above "1. Example 1-1"; information indicating that the UE or Dual Steer Device supports or requests the URSP related to Dual Steer provided to the PCF; or information that the URSP related to Dual Steer in the subscription information must be provided. However, the scope of disclosure of the present disclosure is not limited thereto. Various information may be used, such as information configured in the PCF or information acquired from other NFs (including AF).

For the configuration/update/generation of URSP information related to Dual Steer, the PCF may consider the first (serving) network (network identification information and/or the 3GPP access accessed by the UE) of the UE or Dual Steer Device and/or the second (serving) network (network identification information and/or the 3GPP accesses accessed by the UE(s)) of the UE or Dual Steer Device. It may also consider the location, mobility, movement patterns, and movement direction of the UE(s).

The configuration/update/creation and provision of the URSP are performed by the PCF (i.e., H-PCF) in the Home Network. In this case, there may be no connection/interface/reference point between the UE's Visited Network and the H-PCF (for example, when the Visited Network is an SNPN). If the UE's serving network is not connected to the H-PCF, a UE Policy Association cannot be formed with that serving network, and the situations described in A) to E) above may occur in a network not connected to the H-PCF. In such cases, a problem may arise where the H-PCF cannot recognize these situations. To resolve this, the PCF may recognize/determine whether A) through E) occurred in a network not connected to the H-PCF using one or more of the following methods:
- If any of A) through E) occurs in a network not connected to the H-PCF, the UE may report this via a network connected to the H-PCF. At this time, the UE may report one or more of the network identification information, 3GPP access information, or UE location information corresponding to A) through E). Furthermore, for other networks/3GPP accesses not corresponding to A) through E), the UE may also report one or more of the network identification information, 3GPP access information, and UE location information. The above information may be reported to the AMF and/or PCF.
- When the UE's serving AMF stores or updates network identification information, 3GPP access information, or UE location information in the UDM, the UDM may notify or provide this information to the H-PCF. The H-PCF may receive this notification or provisioning from the UDM or via the UDR. The H-PCF may also subscribe to the notification/provisioning service.
- The H-PCF can subscribe to the UE reachability event notification service via UDM to obtain information for the UE's serving network.

Updating the URSP for the UE or Dual Steer Device may be performed via a newly registered/added network/3GPP access (which may be the first network/3GPP access or the second network/3GPP access). However, the newly registered/added network may not be the Home Network, or a connection/interface/reference point may not exist between the H-PCF and the newly registered/added network. In this case, if another network registered by the UE is the Home Network or a connection/interface/reference point exists with the H-PCF, the URSP update may also be performed via that other network.

Based on URSP, the UE or Dual Steer Device may establish a PDU session via the preferred network and/or 3GPP access. Alternatively, based on URSP, the UE or Dual Steer Device may determine which service to receive (or which application traffic mapped/matched to which Traffic Descriptor to transmit) using the PDU Session with the user plane connection. Accordingly, the UE or Dual Steer Device may (re-)evaluate the validity of the URSP under the following additional conditions, in addition to the conditions under which the conventional URSP was (re-)evaluated (see TS 23.503 V18.0.0, Section 6.6.2.3 UE procedure for associating applications to PDU Sessions based on URSP):
- After registering to the second network, or after a second serving network is established, or after adding a second serving network, the URSP's validity may be (re-)evaluated.
- If one or more of the two serving networks changes, the validity of the URSP may be (re-)evaluated.
- If one or more of the two 3GPP accesses changes, the validity of the URSP may be (re-)evaluated.

The UE or Dual Steer Device may establish an MA PDU Session based on URSP. Furthermore, based on the URSP, the UE or Dual Steer Device may establish a PDU Session via the first network/3GPP access. Furthermore, based on the URSP, the UE or Dual Steer Device may establish a PDU Session via the second network/3GPP access. This operation may be performed whether the UE or Dual Steer Device is registered via one network/3GPP access or via two networks/3GPP accesses.

As a result of the URSP (re-)evaluation, an already established PDU Session may exist on a non-preferred or less preferred network/3GPP access. In this case, the UE or Dual Steer Device may move to the preferred network and/or 3GPP access, or establish a new PDU session via the preferred network and/or 3GPP access.

The URSP related to Dual Steer may include VPLMN-specific URSP Rules. It may also include non-subscribed SNPN-specific URSP Rules.

As the UE or Dual Steer Device registers with two 3GPP access/networks, two different PCFs (i.e., UE Policy PCF or UE PCF) may be selected. In such cases, the two PCFs can provide URSP to the UE or Dual Steer Device in an aligned/synchronized/coordinated manner. The alignment/synchronization/coordination may be performed via the UDR or directly between the PCFs. Consequently, only one PCF may provide the URSP to the UE or Dual Steer Device. Here, the single PCF may be determined through negotiation between the two PCFs, by local policy/configuration, or by being the PCF where the first UE Policy Association was performed.

If both PCFs provide URSP to the UE or Dual Steer Device, these URSPs are assumed to be aligned/synchronized/coordinated. Therefore, the UE or Dual Steer Device may always use the most recent/last provided URSP.

Alignment/synchronization/coordination between PCFs may be achieved, for example, by one PCF providing information about the 3GPP access/network that the PCF is associated with to the other PCF, enabling the latter to configure/update/generate the URSP. Alternatively, one PCF may configure/update/generate the URSP based on information about two 3GPP access/networks and provide it to the other PCF.

Even if a UE registers with two 3GPP access networks, it is possible to ensure that only one PCF is selected. To achieve this, one or more of the following methods may be used:
- The AMF of the first network to which the UE registers selects the PCF (or H-PCF in the case of roaming) and stores it in the UDM. Then, the AMF of the second network to which the UE registers selects the PCF (or H-PCF in the case of roaming) based on the information stored in the UDM.
- One of the two PCFs requests the V-PCF or AMF to change the UE Policy Association to the other PCF. This other PCF then becomes the PCF that continues to maintain the UE Policy Association.
- PCF information is stored/configured in subscription information, and the same PCF is selected based on this.

When providing Dual Steer service using two UEs, a single PCF may be selected for the UEs. To achieve this, one or more of the following methods may be used:
- The AMF of the first network, where the first UE is registered, selects the PCF (or H-PCF in the case of roaming), and the AMF stores information related to the PCF in the UDM. Then, the AMF of the second network, where the second UE is registered, selects the PCF (or H-PCF in the case of roaming) based on the information stored in the UDM.
- One of the two PCFs requests the V-PCF or AMF to change the UE Policy Association to the other PCF. This other PCF then becomes the PCF that ultimately maintains the UE Policy Association.
- PCF information is stored/configured in the subscription information, and the same PCF is selected based on this.

### II. The Second Disclosure of the Present Disclosure

A DualSteer device is defined. The DualSteer device assumes that a single device has two subscriptions/SUPIs from the same operator. Therefore, the terminal (e.g., DualSteer device) may perform registration via each 3GPP access using the two subscriptions. However, because the Dual steer device uses different subscriptions, a method is required to support MA PDU sessions using two subscriptions in order to perform traffic switching/steering within the network. The second disclosure of the present disclosure presents a solution for supporting MA PDU sessions.

The method for creating a PDU Session in the dual 3GPP access proposed in the second disclosure of the present disclosure comprises a combination of one or more of the following operations/configurations/steps.

The present disclosure uses the terms Application Function (AF) and Application Server (AS) interchangeably.

The methods presented in the present disclosure may be performed or used in combination or complementarily.

In the following description, PLMN may be interpreted as SNPN, Equivalent PLMN, etc., and SNPN may be interpreted as PLMN.

### 1. Example 2-1

Example 2-1 describes an example of the registration procedure performed by a DualSteer device.

A DualSteer device may include two UEs. The DualSteer device has two subscriptions. Therefore, based on each subscription, the DualSteer device may perform the registration procedure such that the two UEs operate in separate operations. If necessary, the DualSteer device may also receive policy information applicable to both UEs from the network. For example, the DualSteer device may receive rule information for traffic steering/switching, network selection information, etc., from the network via two 3GPP accesses.

It is assumed that the two UEs constituting the DualSteer device may exchange information and coordinate with each other. This assumption applies throughout the present disclosure.

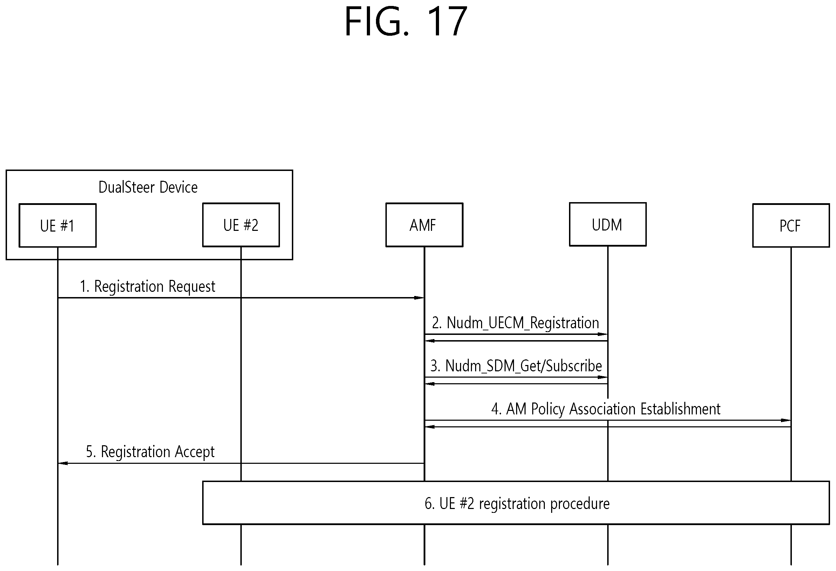

The procedure shown in the example of FIG. 17 below illustrates the registration procedure for the DualSteer device. The DualSteer device has two subscriptions, denoted as UE#1 and UE#2.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 17** **illustrates an exemplary of example 2-1 according to an embodiment of the second disclosure of the present disclosure.**

FIG. 17 illustrates an example of the registration procedure performed by a DualSteer device within the same PLMN.

Example 2-1 of the first embodiment of the second disclosure of the present disclosure includes the registration procedure of a DualSteer device within the same PLMN.

UE#1 and UE#2 in FIG. 17 may be included in a single DualSteer device.

UE#1 of the DualSteer device performs the Registration procedure. Related to the registration procedure, the registration procedures in FIGS. 5 and 6 may be referenced. The terminal may include information indicating the presence of dual steer capability in the Registration Request message. In the following example, the terminal, UE, may refer to a single terminal, a single UE, included within the DualSteer device. Thus, UE#1 may include information indicating its dual steer capability in the Registration Request message. This capability information may be included only when the DualSteer device requires dual steer operation, regardless of the actual capability status. Alternatively, the DualSteer Device may separately include information in the registration request message indicating its desire for dual steer operation along with the capability.

2. The AMF performs registration for the terminal with the UDM. At this time, the AMF may also transmit information indicating that the terminal's operation is in dual steer mode to the UDM. Upon receiving this information, the UDM may store information indicating that the terminal is in dual steer mode within UE#1's context. Based on the subscription information, the UDM may determine that UE#1 and UE#2 belong to the same subscriber. Based on this, the UDM may recognize that UE#1 and UE#2 are terminals used for dual steer. That is, the UDM stores and manages mapping information for UE#1's SUPI#1 and UE#2's SUPI#2.

3. The AMF may retrieve subscription information for the terminal from the UDM. The terminal's subscription information may include data permitting the terminal's operation in dual steer mode.

4. The AMF creates an AM Policy Association. The selected PCF can be chosen according to the existing PCF selection procedure, considering the SUPI range.

5. The AMF may transmit a Registration Accept. The AMF may include information in the registration acceptance message indicating that the terminal is capable of dual steer operation. Based on this information, the terminal can perform registration for UE#2.

6. UE#2 performs the registration procedure. The registration procedure may be performed identically to steps 1 through 5. However, since UE#2 has already received information from the network that the DualSteer device permits dual steer operation, UE#2 may perform registration using only the conventional registration procedure. The AMF involved in UE#2's registration procedure may be a different AMF than UE#1's AMF. The AMF may perform operations to select the same PCF chosen in step 4.

To ensure the same PCF is selected, the subscription information of the terminals (i.e., UE#1's subscription information and UE#2's subscription information) may include information for same PCF selection (e.g., PCF instance address). Alternatively, after the AMF created an AM Policy Association for UE#1 in step 4, it may have stored the selected AM Policy information in the UDM. Based on this information, the UDM may include the AM Policy information stored in the subscription information for UE#1 when sending the subscription information for UE#2 to the AMF.

During the registration process of UE#1 or UE#2, the AMF may transmit preferred access/network information to the terminal when creating a PDU session using a specific DNN/S-NSSAI. For example, the AMF may push information to the terminal in the following format:
DNN#1 + S-NSSAI#A: 3GPP TN preferred; and
DNN#2 + S-NSSAI#B: 3GPP NTN preferred,
   or
DNN#1 + S-NSSAI#A: HPLMN preferred; and
DNN#2 + S-NSSAI#B: VPLMN preferred.

When creating a single access PDU session rather than an MA PDU session, this information may be used to determine which 3GPP access the DualSteer terminal should use to establish the PDU session.

### 2. Example 2-2

Example 2-2 includes an example of the MA PDU session establishment procedure for a DualSteer device.

A DualSteer device may perform the procedure to establish an MA PDU session via each 3GPP access. The following shows the procedure for a DualSteer device to establish an MA PDU session within the same PLMN.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

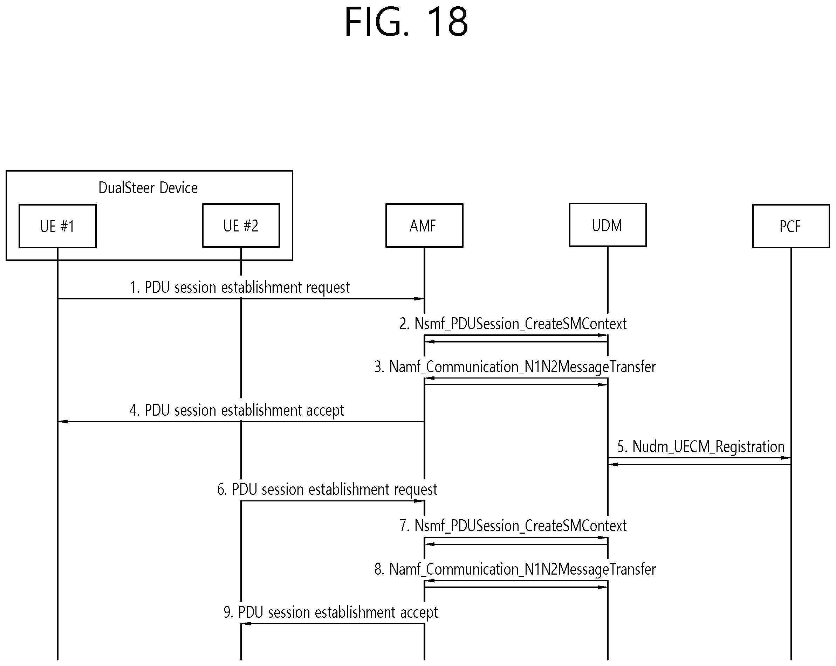

**FIG. 18** **illustrates the first embodiment and/or the second embodiment of example 2-2 according to an embodiment of the disclosure of the present disclosure.**

Example 2-2 of the first embodiment according to the present disclosure may include the process of establishing an MA PDU session for a DualSteer device within the same PLMN (using two different PDU Session IDs).

FIG. 18 includes the MA PDU session configure procedure for a DualSteer device within the same PLMN (using two different PDU Session IDs).

1. UE#1 may transmit a PDU session establishment request message. UE#1 performs the procedure to establish an MA PDU session. The basic procedure follows the MA PDU Session Establishment procedure in clause 4.22.2 of TS 23.502 V18.0.0. UE#1 assigns a PDU Session ID to be used in the MA PDU session and transmits a PDU Session Establishment Request message that includes the PDU Session ID. At this time, UE#1 requests UE#2 to assign a PDU Session ID to be used for the MA PDU session, and UE#1 may transmit the PDU Session ID included in the PDU Session Establishment Request.

2. The AMF selects the SMF according to the prior arts and transmits the PDU Session Establishment Request message sent by the terminal to the SMF. During this process, the AMF may transmit information to the SMF indicating that the terminal is in dual steer operation. For example, as shown in Example 2-1 of the present disclosure, based on information transmitted by the terminal during the registration process, the AMF may transmit information indicating that the terminal's operation is in dual steer mode. Alternatively, based on a new Request Type indicating that the terminal wishes to create an MA PDU session for Dualsteer, the AMF may transmit information indicating that the terminal's operation is in dual steer mode. For example, based on the terminal configuring the Request Type as a DualSteer PDU request rather than a MA PDU request in the UL NAS Transport message transmitting the PDU Session Establishment in step 1, the SMF may be notified that the session is for Dual Steer.

3-4. The SMF executes the procedure to establish a PDU session. To notify that the PDU session has been established, the SMF transmits a PDU Session Establishment Accept message to the terminal via the AMF. At this time, the SMF may transmit the ATSSS rule to be used in the MA PDU session to the terminal.

The conventional ATSSS rule is used for 3GPP/non-3GPP access and therefore includes information indicating whether traffic should be sent over 3GPP access or non-3GPP access.

However, since all traffic for the MA PDU session for Dualsteer must be transmitted over the 3GPP access, the conventional ATSSS rule cannot be applied as-is. To resolve this issue, the SMF may include the PDU Session ID assigned by each 3GPP access in the ATSSS rule, instead of using 3GPP/non-3GPP. Based on the PDU Session ID, the SMF can indicate which 3GPP access to send traffic to.

For example, in active-standby steering mode, the SMF can include information in the ATSSS rule that the active access has PDU Session ID#1 and the standby access has PDU Session ID#2, and then may transmit the ATSSS rule. To enable the use of such an ATSSS rule, UE#1 may perform the following operations. For example, UE#1 may pre-allocate PDU Session ID#2 for use in the MA PDU session based on UE#2. When UE#1 transmits the PDU Session Establishment Request, UE#1 may pre-transmit PDU Session ID#2. UE#1 may include PDU Session ID#2 within the PDU Session Establishment message for transparent processing by the AMF, or may alternatively transmit PDU Session ID#2 to the SMF in a format such as a PCO.

5. The SMF performs registration for the PDU Session with the UDM. At this time, the SMF may transmit information indicating that the PDU Session is used for dual steering to the UDM. In accordance with the prior arts, UE#1's SUPI#1 and the PDU Session ID, DNN, and S-NSSAI information assigned to UE#1 are transmitted to the UDM. Additionally, the SMF may transmit the PDU Session ID information to be used by UE#2 to the UDM.

The terminal may have stored the mapping information between SUPI#1 and SUPI#2 in the UDM during the registration process according to Example 2-1. Based on this mapping information, the UDM may store the PDU Session ID information to be used by UE#2 in the PDU Session information for SUPI#2 (i.e., "UE context in SMF data"). The PDU Session ID information to be used by UE#2 can be delivered to UE#2's serving AMF. Based on the PDU Session ID information to be used by UE#2, UE#2's serving AMF may also select the SMF for the MA PDU session.

6. UE#2 transmits a PDU Session Establishment message to add a leg to the MA PDU session. UE#2 may use the PDU Session ID described in steps 3, 4, and 5. That is, UE#2 may transmit a PDU Session Establishment Request message that includes PDU Session ID#2. Based on PDU Session ID#2, the AMF may select the SMF using the "UE context in SMF data" subscription information received from the UDM. Consequently, the same SMF selected in step 2 is selected in step 6, and the UE transmits the PDU Session Establishment message to the same SMF via the AMF.

7-9. The SMF processes the terminal's request and sends a Session Establishment Accept PDU to the terminal to notify it that a leg of the MA PDU session has been added. The SMF may either resend the same ATSSS rule information provided to the terminal in step 3/4 or send updated ATSSS rule information.

Below, the second embodiment of Example 2-2 is described. For the second embodiment of Example 2-2, reference may again be made to FIG. 18. As described earlier, FIG. 18 illustrates the first embodiment and/or the second embodiment of Example 2-2 according to an embodiment of the present disclosure.

The second embodiment of Example 2-2 illustrates the process by which a DualSteer device establishes an MA PDU session (using a single PDU Session ID) within the same PLMN.

FIG. 18 illustrates the MA PDU session configure procedure for a DualSteer device within the same PLMN (using a single PDU Session ID).

1. UE#1 performs the procedure to establish an MA PDU session. The basic procedure follows clause 4.22.2 MA PDU Session Establishment in TS 23.502 V18.0.0. UE#1 assigns a PDU Session ID to be used in the MA PDU session. UE#1 transmits a PDU Session Establishment Request message that includes the PDU Session ID to be used in the MA PDU session. At this time, UE#1 may assign the PDU Session ID within a predefined specific range. Furthermore, to enable UE#2 to use the assigned PDU Session ID, UE#1 may pass the assigned PDU Session ID information to UE#2.

2. The AMF selects the SMF according to prior arts and transmits the PDU Session Establishment Request message sent by the terminal to the SMF. During this process, the AMF may transmit information indicating the terminal's dual steer operation to the SMF. For example, based on information transmitted by the terminal during the registration process in Example 2-1, the AMF may transmit information to the SMF indicating the terminal's dual steer operation. Alternatively, it could be based on a new Request Type indicating the terminal wishes to establish an MA PDU session for Dual Steer. For example, based on the terminal configuring the Request Type as a DualSteer PDU request rather than an MA PDU request in the UL NAS Transport message transmitting the PDU Session Establishment in step 1, the terminal may inform the SMF that this is a session for Dual Steer.

3-4. The SMF proceeds with the procedure to establish a PDU session. The SMF transmits a PDU Session Establishment Accept message to the terminal to notify it that the PDU session has been established. At this time, the SMF may transmit the ATSSS rule to be used in the MA PDU session to the terminal.

The conventional ATSSS rule is used for 3GPP/non-3GPP access and therefore includes information indicating that traffic must be sent to either 3GPP access or non-3GPP access. However, in the MA PDU session for Dualsteer, since all traffic must be transmitted over the 3GPP access, the conventional ATSSS rule cannot be used. To resolve this issue, the SMF may transmit the PDU Session Establishment Accept to the terminal, assign the path ID to be used on that path, and notify the terminal of the assigned path ID. Instead of the 3GPP / non-3GPP distinction included in the conventional ATSSS rule, the SMF may use the path ID assigned for each 3GPP access to indicate which 3GPP access the traffic should be sent to. For example, in active-standby steering mode, the SMF may configure the active access included in the ATSSS rule as path#1 and the standby access as path#2.

Alternatively, when the terminal transmits a PDU Session Establishment Request, UE#1 and UE#2 may each assign a path ID and notify the SMF of their respective path IDs. In this case, UE#1 may transmit the PDU Session ID information to UE#2 and request path ID assignment from UE#2. Then, UE#2 may inform UE#1 of the path ID it assigned. Alternatively, UE#1 may directly assign a path ID, notify the SMF, and then may inform UE#2 of the assigned path ID information.

5. The SMF performs registration for the PDU Session via the UDM. At this time, the SMF may notify the UDM that the PDU Session is used for dualsteer. In accordance with the prior arts, UE#1's SUPI#1, the PDU Session ID assigned by UE#1, the DNN, and the S-NSSAI information are transmitted to the UDM.

The terminal may have stored the mapping information between SUPI#1 and SUPI#2 in the UDM during the registration process according to Example 2-1. Based on this mapping information, the UDM may store the PDU Session ID information to be used in the MA PDU session within the PDU Session information of SUPI#2 (i.e., "UE context in SMF data"). The PDU Session ID information to be used in the MA PDU session is transmitted to UE#2's serving AMF. UE#2's serving AMF may select the SMF for the MA PDU session based on the PDU Session ID information to be used in the MA PDU session.

6. UE#2 transmits a PDU Session Establishment request message to add a leg to the MA PDU session. At this time, the PDU Session ID assigned by UE#1 in step 1 and communicated to UE#2 is used as the PDU Session ID. Based on the PDU Session ID, the AMF selects the SMF based on the "UE context in SMF data" subscription information received from the UDM. Consequently, the same SMF selected in step 2 is chosen, and UE#2 sends a PDU Session Establishment message to the SMF via the AMF.

7-9. The SMF processes the terminal's request and sends a PDU Session Establishment Accept to the terminal to notify it that a leg has been added to the MA PDU session. The SMF may also include the path ID information assigned to UE#2's PDU session in the PDU Session Establishment Accept. The SMF may either retransmit the same ATSSS rule information provided to the terminal in step 3/4 or transmit updated ATSSS rule information.

### 3. Example 2-3

An example of dual steer device management using Primary/Secondary SUPI and DualSteer PDU session support using separate PDU sessions is described.

For a dual steer device, the following description may apply. A DualSteer device includes two SUPIs (i.e., two USIMs) and their corresponding PEIs. The subscription information for each SUPI indicates whether the UE can operate as a DualSteer device and identifies the SUPI related to the dual steer device (i.e., the other SUPI of the dual steer device). The subscription information also includes whether the SUPI of the DualSteer device is the primary SUPI or the secondary SUPI. The primary SUPI is no different from a regular SUPI, but the use of the secondary SUPI may be restricted according to the operator's policy (e.g., the secondary SUPI may only be used for DualSteer).

Additionally, the subscription information includes PCF selection information (e.g., PCF address, FQDN) used to select the same PCF for each UE of the DualSteer device. It is assumed that the subscription information for two associated SUPIs is stored in the same UDM. That is, when the AMF selects a UDM for each SUPI, the selected UDM is the same UDM. This may be achieved by methods such as assigning the same routing indicator, depending on how the operator configures it.

Regarding registration and mobility management for DualSteer devices, the following description applies.

If a UE wishes to operate as part of a DualSteer device, the UE indicates its capability in the registration request message. If the UE is allowed to operate as a DualSteer device based on the subscription information, the AMF indicates in the registration acceptance message that the UE is permitted to operate as a DualSteer device. The AMF indicates whether the SUPI used for registration is the primary SUPI or the secondary SUPI based on subscription information. The UE stores whether the SUPI is the Primary SUPI or the Secondary SUPI. If the UE attempts to register with the network using the secondary SUPI first, the AMF indicates that registration with the primary SUPI is required and may reject the UE's request.

Instead of providing Primary/Secondary SUPI information to the UE, the UE of a DualSteer device may be pre-configured to determine whether it connects to the Primary SUPI or Secondary SUPI.

Examples of AM and UE policy management for DualSteer devices are as follows.

During the registration procedure (using the Primary SUPI), the AMF selects a PCF for the UE based on the PCF selection information in the subscriber profile. When the AMF configures an AM Policy Association, it provides the SUPI associated with the registered UE's SUPI (i.e., the Secondary SUPI). Additionally, the AMF provides mobility restriction information (e.g., RFSP index, RAT restriction, core network type restriction) to the PCF. If a dual steer device registers using a different SUPI (i.e., the secondary SUPI), the serving AMF selects the same PCF according to the PCF selection information and provides the SUPI related to the registered UE (the primary SUPI). The PCF may update mobility restriction information (e.g., RFSP index, RAT restriction, core network type restriction) to prevent DualSteer devices from being served on the same cell/frequency for each 3GPP connection.

The URSP rules are enhanced to indicate whether DualSteer PDU sessions are preferred in the network. This may be achieved by adding a new value "DualSteer" or "Dual 3GPP Access" to the access type preference in the Route Selection Descriptor, or by adding new route selection components. In the policy container, the UE indicates whether it supports dual steer policies, enabling the PCF to provide enhanced URSP rules to the UE. When generating URSP rules for dual steer PDU sessions, the PCF considers the subscription information for the UE on the dual steer device (i.e., whether dual steer operation is permitted).

When a terminal with a Primary SUPI performs Registration on the network, the AMF may provide the terminal with network selection information for the Secondary SUPI. Along with this, the AMF may transmit information to the terminal about when to perform Registration using the Secondary SUPI. Information about when to perform registration may include, for example: whether to perform it immediately; whether to perform it when specific conditions are met (e.g., when the terminal enters a specific area); or whether to perform the registration procedure after a DualSteer PDU Session is established. Based on this information, a terminal with a Secondary SUPI may select a network and perform registration accordingly.

Alternatively, instead of providing network selection information in the Registration accept, the AMF may perform the following operations. If the terminal has established a DualSteer PDU Session, the AMF may provide network selection information to the terminal at that time via the UE Configuration Update procedure. Or, regardless of whether a DualSteer PDU Session has been established, the AMF may decide to transmit network selection information based on the terminal's location information, etc.

The network selection information provided by the AMF to the terminal may be generated directly by the AMF or transmitted to the terminal by the PCF in policy form through interaction with the PCF.

An example of a dual steer PDU session including separate PDU sessions is as follows.

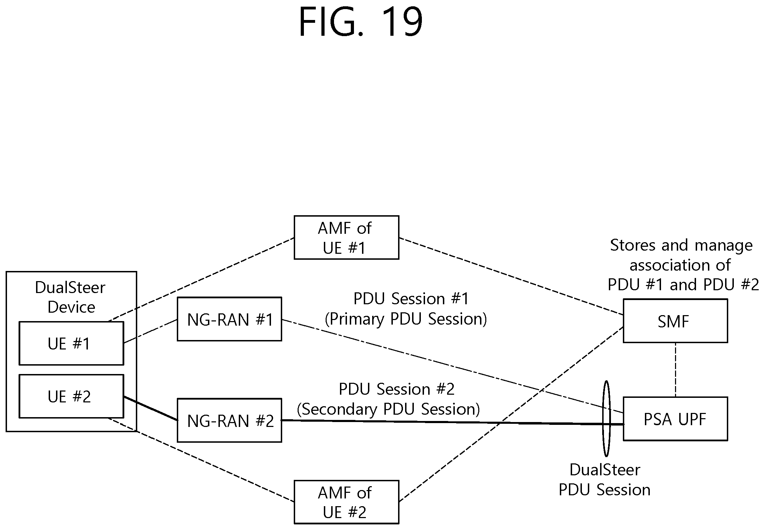

Refer to FIG. 19 to describe a DualSteer PDU session including separate PDU sessions.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 19** **is an example of a Dualsteer PDU session according to an embodiment of the disclosure of the present disclosure.**

A dualsteer PDU session may be established by bundling two separate PDU sessions configured through different accesses. FIG. 19 shows a schematic example of a DualSteer PDU session.

Each PDU session in the dual steer PDU session, according to the example in FIG. 19, shares a common DNN, S-NSSAI, SSC mode, and IP address. When the UE establishes a PDU session to be used for a Dual Steer PDU session, the UE may configure the request type to "Dual Steer PDU Request". Based on the Dual Steer PDU Request, the network can recognize that the requested PDU session is to be used for a Dual Steer PDU session.

For example, the first PDU session used in a DualSteer PDU session may be named the 'Primary PDU session', and the second PDU session may be named the 'Secondary PDU session'.

The DualSteer rules are described below. For example, the DualSteer rules may refer to the steering and switching rules for DualSteer PDU sessions.

The steering and switching rules for a DualSteer PDU session (DualSteer Rules) follow the same structure as ATSSS rules, except for the following differences:
- The Active-Standby mode is supported among the steering modes.
- In Active-Standby mode, Primary Access and Secondary Access are used to denote access instead of 3GPP/N3GPP access.

A DualSteer PDU session may also support non-3GPP access.

For example, a DualSteer device with a DualSteer PDU session having user plane resources activated via dual 3GPP connections may register via non-3GPP access. In this case, only one of the 3GPP accesses may be active, and which 3GPP access remains active is determined by the DualSteer device. If the DualSteer device wishes to maintain the primary PDU session, it registers the non-3GPP access using a secondary SUPI and triggers a handover procedure for the secondary PDU session configured via the 3GPP access. Thereafter, the existing DualSteer rules are used to determine traffic steering and switching.

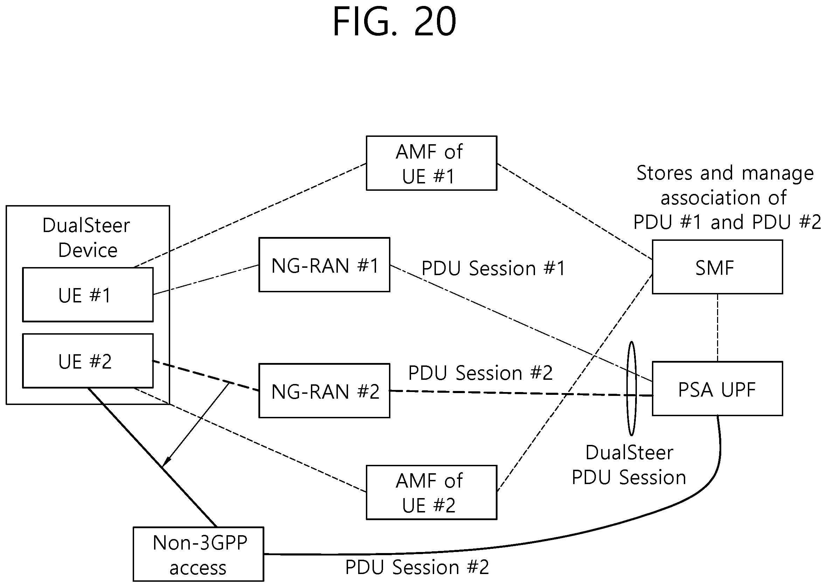

Referring to FIG. 20, an example is described where a DualSteer PDU session supports non-3GPP access.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 20** **illustrates an example of a Dualsteer PDU session according to an embodiment of the present disclosure supporting non-3GPP access.**

Referring to the example in FIG. 20, a DualSteer PDU session may support non-3GPP access using a handover between 3GPP access and non-3GPP access. For example, PDU session #2 among the DualSteer PDU sessions established according to the example in FIG. 19 may be handed over to non-3GPP access.

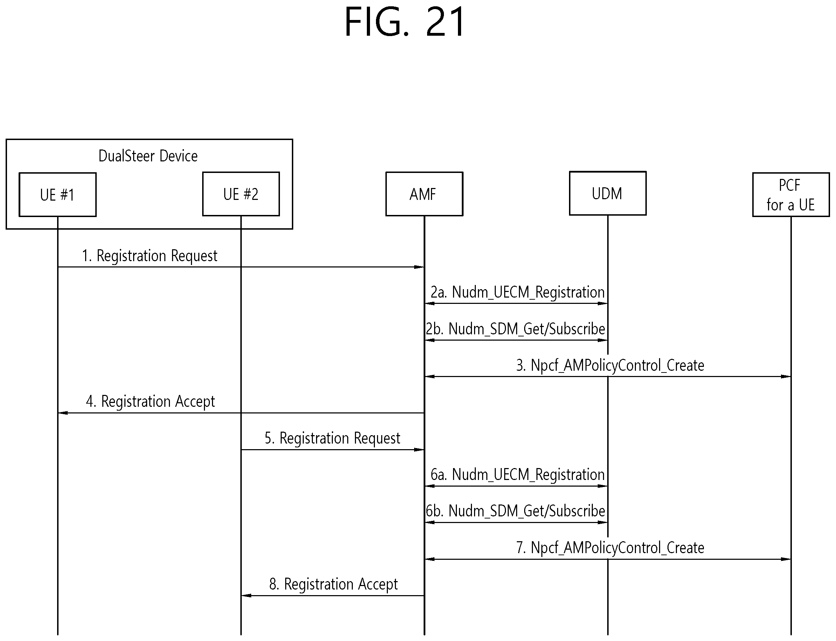

Below, the registration procedure for a DualSteer device is described with reference to FIG. 21.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 21** **illustrates a registration procedure for a Dualsteer device according to an embodiment of the present** disclosure.

According to the example in FIG. 21, the DualSteer device may include UE#1 and UE#2.

**Note that the serving AMF of UE#1 may be the same as or different from the serving AMF of UE#2. That is, although the AMF is shown as one in the example of** **FIG. 21****, this is merely an example.** The AMF in steps 5 through 8 may differ from the AMF in steps 1 through 4.

1. UE#1 transmits a registration request message. If UE#1 intends to operate as a DualSteer device, UE#1 may transmit a registration request message including functionality for dual steer. UE#1 indicates its capability for dual steer in the registration request message.

2a. Based on UE#1's SUPI, the AMF selects a UDM and registers with the UDM, indicating that UE#1 is performing DualSteer operation. The UDM verifies whether UE#1 may operate as a DualSteer device based on UE#1's subscription information. If permitted, the UDM accepts the UE registration and stores that UE#1 is operating as a DualSteer device.

2b. The AMF retrieves the subscription data for UE#1. Since the UDM has stored that UE#1 is in operation as a DualSteer device, the subscription information provided by the UDM to the AMF includes DualSteer subscription information. If the AMF already has subscription information, the UDM triggers a Nudm_SDM_Notification to provide the updated subscription information.

3. Based on the PCF selection information in UE#1's subscription information data, the AMF selects a PCF and configures an AM Policy Association. During this process, the AMF indicates to the PCF that the UE is operating as a DualSteer device and may also include UE#2's SUPI obtained from UE#1's subscription information data.

4. Based on the subscription information, the AMF sends a registration acceptance message that includes information related to whether the network supports DualSteer and whether the UE is permitted to operate as a DualSteer device. The AMF also indicates that UE#1's SUPI is the Primary SUPI.

5. If the UE is permitted to operate as a DualSteer device in step 4, UE#2 may perform the registration procedure while UE#1 is registered. UE#2 may transmit a registration request message that includes its capability for dual steer.

Note that even if UE#2 has not received information that UE#1 is permitted to operate as a DualSteer device, UE#2 may still perform the registration procedure without DualSteer capability. In this case, the network may manage each registration independently, or the UDM may reject the secondary registration according to the operator's policy.

6a. The AMF (which may differ from the AMF providing UE#1) selects the UDM based on UE#2's SUPI. The selected UDM is the same as the UDM selected in step 2a. The AMF registers the UE with the UDM, indicating that the UE is performing dual steer operation. The UDM verifies whether UE#2 may operate as a dual steer device based on the UE's subscription. If permitted, the UDM accepts the UE registration and stores that the UE is operating as a dual steer device.

6b. The AMF retrieves the subscription information for UE#2. Since the UDM has stored that UE#2 is in operation as a DualSteer device, the subscription information provided by the UDM to the AMF includes DualSteer-related subscription information. If the AMF already has subscription information, the UDM triggers a Nudm_SDM_Notification to provide the updated subscription information.

7. The AMF selects a PCF based on the PCF selection information in UE#2's subscriber profile data and configures an AM Policy Association. During the configuration process, the AMF indicates that the UE is in DualSteer operation and includes UE#1's SUPI obtained from UE#2's subscriber profile data. Based on this information, the PCF may coordinate the AM policies for UE#1 and UE#2. e.g., the PCF may select the RAT/Frequency Selection Priority (RFSP) index to enable UE#1 and UE#2 to migrate to different RATs or adjust RAT restrictions.

8. The AMF sends a registration acceptance message including information related to whether the network supports DualSteer and whether the UE is permitted to operate as a DualSteer device. The AMF indicates that UE#2's SUPI is the Secondary SUPI.

A change in subscription status while UE#1 and/or UE#2 are registered may prevent UE#1 and UE#2 from operating as DualSteer devices. In this case, the UDM removes the stored information indicating the UE is operating as a DualSteer device and notifies the AMF of the updated subscription information. Depending on operator policy, the UDM may trigger deregistration for the UE with the Secondary SUPI.

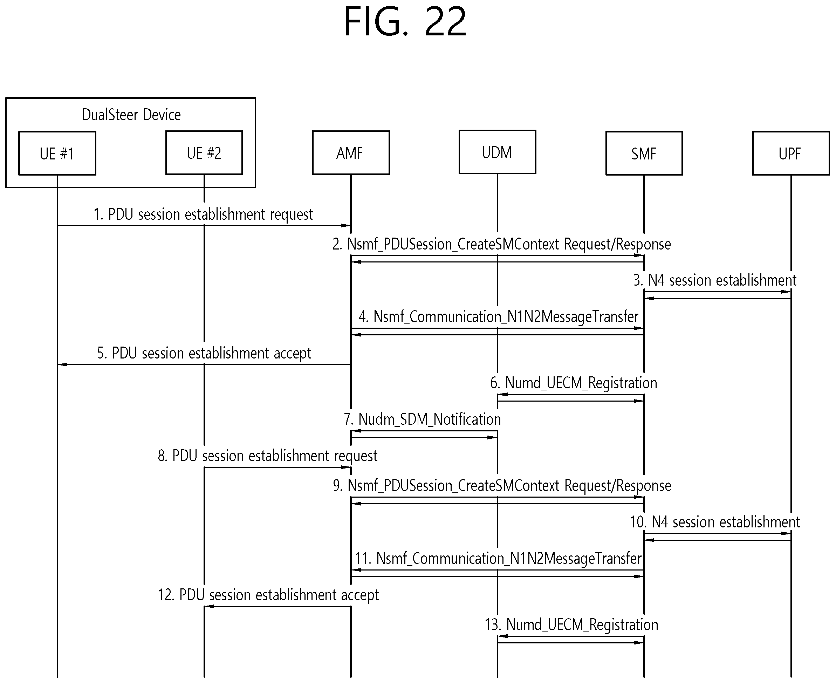

Below, with reference to FIG. 22, the procedure for establishing a DualSteer PDU session is described.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 22** **illustrates an establishment procedure for a Dualsteer PDU session according to an embodiment of the present disclosure.**

According to the example in FIG. 22, the DualSteer device may include UE#1 and UE#2.

Note that the serving AMF of UE#1 may be the same as or different from the serving AMF of UE#2. That is, although the AMF is shown as one in the example of FIG. 21, this is merely an example. The AMF in steps 8 to 13 may differ from the AMF in steps 1 to 7.

UE#1 transmits a PDU session establishment request message. For example, UE#1 transmits an UL NAS transmission message that includes the request type, PDU session ID, DNN, S-NSSAI, and N1 SM container (including the PDU session establishment request). The request type is configured to be "dual steer PDU request".

For reference, this may also be triggered according to the URSP rules of a UE whose access type preference is configured to DualSteer, as previously described.

2. The AMF selects the SMF and forwards the received N1 SM container (which includes the PDU session establishment request) to the SMF.

3. The SMF selects the UPF and establishes an N4 session.

4. Based on the PCC rule received from the PCF, the SMF triggers the Namf_Communication _N1N2MessageTransfer and sends the PDU session establishment acceptance message. The PDU session establishment acceptance message sent by the SMF includes the DualSteer rule.

5. The AMF sends a PDU session configure acceptance message to the UE.

6. The SMF triggers Nudm_UECM_Registration and registers the PDU session with the UDM (including SUPI, DNN, S-NSSAI, PDU session ID, SMF ID, and DualSteer PDU indication).

7. Based on the PDU Session information of the PDU session registered in step 6, the UDM triggers a Nudm_SDM_Notification to the AMF of UE#1. The UDM updates the subscription information for UE#1 and transmits it to the AMF of UE#2 to update the subscription information for UE#2. This operation may be performed based on UE#1's subscription information, which includes the DualSteer subscription and the related SUPI, namely SUPI#2. As a result, the serving AMF stores the DNN, PDU Session ID, and SMF Identity used for the DualSteer PDU session.

8. UE#2 transmits a PDU session establishment request message. For example, UE#2 transmits an uplink NAS transmission message that includes the request type, PDU session ID, associated PDU session ID, DNN, S-NSSAI, and N1 SM container (which includes the PDU session establishment request with the PDU session ID). The request type is configured to "DualSteer PDU Request". The associated PDU session ID is the PDU session ID of the primary PDU session allocated in Phase 1.

A DualSteer device may be registered to two PLMNs (e.g., HPLMN and VPLMN), and the serving PLMN may not support DualSteer (i.e., the UE may not receive a DualSteer support indication during the registration procedure). For example, in this case, only the HPLMN may support dual steer, while the VPLMN may not. In this scenario, a PDU session may be established in a format such as a Home Routed PDU. That is, since the H-SMF supports dual steer and can manage it, dual steer can be supported regardless of the VPLMN's support status. In this case, UE#2 transmits an UL NAS transmission message (e.g., PDU Session Establishment Request) containing the request type, the connected PDU session ID, DNN, S-NSSAI, and the N1 SM container (which includes the PDU session setup request that includes the PDU session ID). The request type is configured to "existing PDU session". This allows establishing a DualSteer PDU session without affecting PLMNs that do not support DualSteer. The SMF may assign a different actual PDU session ID to the secondary PDU session than the PDU session ID included in the Nsmf_PDUSession_CreateSMContext request, using the PDU session ID included in the PDU session establishment request.

For reference, the UE of the secondary SUPI does not use the PDU session ID of the primary PDU session in the serving PLMN.

9. If the request type is configured to "DualSteer PDU request," the AMF selects the same SMF as chosen in step 2, using the associated PDU session ID (i.e., primary PDU session ID) and subscription information context received from the UDM in step 8.

If the request type is configured to "existing PDU session", the AMF selects the same SMF chosen in step 2 using the associated PDU session ID (i.e., the primary PDU session ID) and the subscription information context received from the UDM in step 8.

The AMF sends the PDU session establishment request to the SMF by invoking the Nsmf_PDUSession_CreateSMContext request.

10. Based on the received PDU session ID, DNN, S-NSSAI, and DualSteer PDU indication, the SMF recognizes that the UE request is for adding a leg to the DualSteer PDU session. The SMF updates the N4 session to configure an additional leg for the DualSteer PDU session.

If the serving PLMN does not support DualSteer, the H-SMF recognizes that the UE request is for adding a leg to a DualSteer session based on the request type configured to "existing PDU session" and the PDU session ID (i.e., the associated PDU session ID) received from the V-SMF.

11. Based on the PCC rule received from the PCF, the SMF triggers a Namf_Communication_N1N2MessageTransfer to send a PDU session establishment acceptance message. The SMF may include the DualSteer rule in the PDU session configuration acceptance message.

12. The AMF sends the PDU session establishment acceptance message to UE#2.

13. The SMF registers the PDU session with the UDM as described in step 6.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

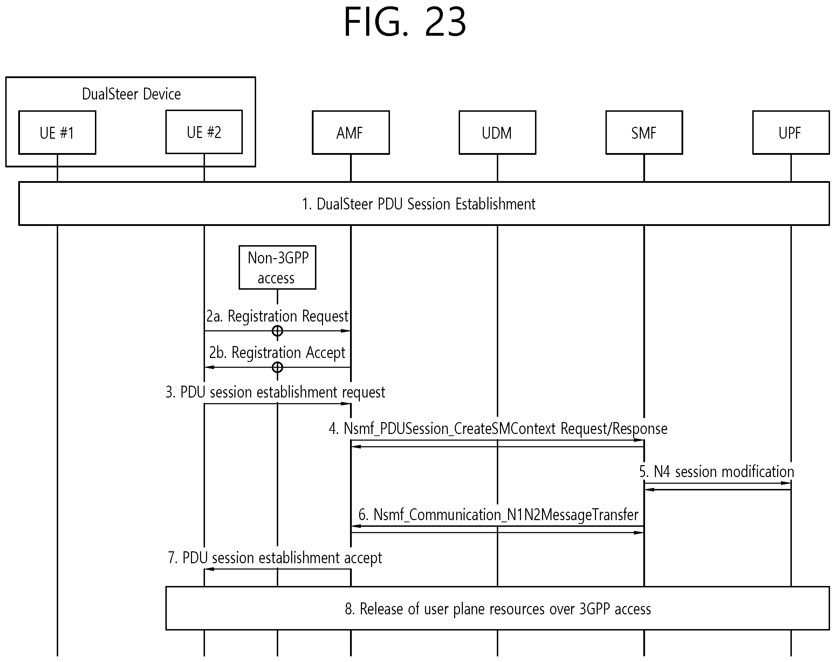

**FIG. 23** **illustrates an example of moving a leg of a Dualsteer PDU session between 3GPP access and non-3GPP access according to an embodiment of the present disclosure.**

FIG. 23 illustrates an example of migrating a leg of a DualSteer PDU session between 3GPP access and non-3GPP access.
1. The DualSteer device establishes a DualSteer PDU session as described in FIG. 22.
2. The DualSteer device attempts to move the secondary PDU session via non-3GPP access. UE#2 triggers registration via non-3GPP access using the Secondary SUPI, i.e., SUPI#2. During registration, UE#2 may transmit the 5G-GUTI associated with SUPI#2.
3. The UE on SUPI#2 sends a PDU session establishment request message in an UL NAS transmission message that includes request type = "existing PDU session" and the PDU session ID of the secondary PDU session.
4. The AMF selects the SMF based on the existing PDU session context.
5. The SMF modifies the N4 Session to configure user plane resources via a non-3GPP connection. At this time, all downlink traffic transmitted via the 3GPP connection of the Secondary PDU session is transmitted via the non-3GPP connection.
6. The SMF sends a PDU session establishment accept message to the UE and provides N2 information to the non-3GPP connection.
7. UE#2 receives the PDU session establishment accept message. From this point onward, all uplink traffic transmitted via the 3GPP connection of the secondary PDU session is transmitted via the non-3GPP connection.
8. The SMF triggers the release of user plane resources via the 3GPP connection of the secondary PDU session.

According to the second disclosure of the present disclosure, the following operation may be supported.

For example, the UE indicates the dual steer capability in the registration request message. For example, the UE includes a new request type = Dual Steer PDU request and the associated PDU session ID during the Dual Steer PDU session configure request procedure. For example, the UE performs traffic steering and switching according to the Dual Steer rules.

For example, the AMF indicates in Nudm_UECM_Registration that the UE is performing Dual Steer operations. For example, during the Npcf_ AMPolicyControl creation service, the AMF includes an indication that the UE is performing dual steer operations and the relevant SUPI of the dual steer device. For example, the AMF performs SMF selection based on the relevant PDU session ID received from the UDM and the subscription information context.

For example, the SMF manages DualSteer PDU sessions using two different PDU session IDs.

For example, the UPF supports multi-access rules via two 3GPP connections.

For example, the UDM manages subscription information (UE Subscription) that includes PCF selection information, such as whether DualSteer operation is permitted. For example, UDM authorizes and stores the UE for DualSteer operation. For example, UDM notifies the serving AMF of UE#2 with the PDU session ID, DNN, and SMF Identity when the SMF registers the PDU session with UDM.

For example, the PCF adjusts the AM policy based on an indication that the UE is performing DualSteer operation and the relevant SUPI of the DualSteer device. For example, the PCF may configure the RFSP Index, RAT restriction, etc., differently for each UE.

Although the process of the SMF directly generating ATSSS rules was described as an example, this is merely an example. The scope of the present disclosure is not limited to cases where the SMF directly generates ATSSS rules. For example, when using a PCF, the SMF may inform the PCF of necessary information (e.g., information indicating that the PDU session is for Dualsteer, the PDU Session ID assigned by UE#1, the PDU Session ID assigned by UE#2, etc.). Based on this, the PCF may generate a PCC rule and transmit the PCC rule to the SMF. The SMF may generate an ATSSS rule based on the PCC rule. Alternatively, instead of the SMF assigning a path ID, the PCF may assign the path ID. Or, without assigning a path ID, a PCC rule for the Dualsteer PDU session may be generated using Primary Access / Secondary Access.

### III. Examples of Application of the Disclosure of the Present Specification

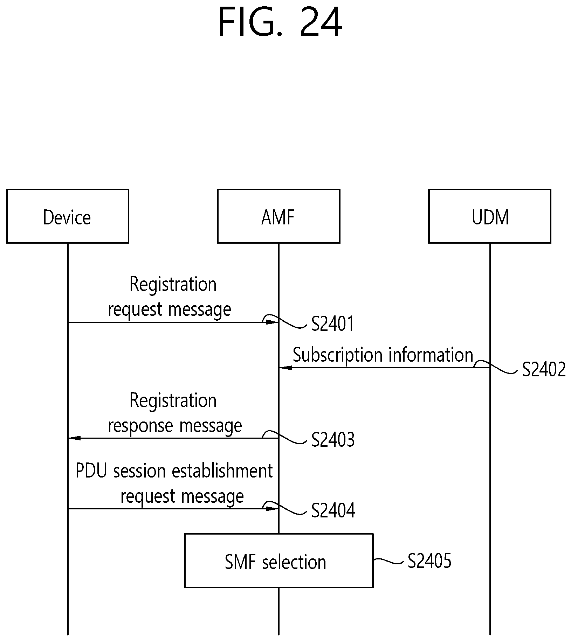

Hereinafter, with reference to FIG. 24, examples of application of the disclosure of the present specification are described. The various examples of the first disclosure of the present disclosure described above and the various examples of the second disclosure may also be combined.

Below, with reference to FIG. 24, an example of operations according to one embodiment of the disclosure of the present specification is described. The example in FIG. 24 may include operations based on the first example and/or the second example of the disclosure of the present specification.

The following figures have been prepared to illustrate specific examples of the present disclosure. The names of specific devices or specific signals/messages/fields shown in the figures are provided merely as examples; therefore, the technical features of the present disclosure are not limited to the specific names used in the following figures.

**FIG. 24** **illustrates an example of operations according to an embodiment of the present disclosure.**

For reference, the procedure shown in Figure 24 is merely an example, and the scope of the present disclosure is not limited by the example in Figure 24.

For example, with respect to the example in Figure 24, the operation described in the examples of FIGS. 1 to 23 may also be applied. For example, even operations or contents not directly described in the example of FIG. 24 may be applied, as described in the various examples of the present disclosure.

The operations illustrated in FIG. 24 are merely examples, and the scope of the present disclosure is not limited to the operations illustrated in FIG. 24.

The device of FIG. 24 may include at least one UE. For example, the device may be a dualsteer device as described in various examples of the present disclosure. The device may include a first UE and a second UE. The device may be associated with two SUPIs.

In step S2401, the device transmits a registration request message.

For example, the registration request message may include the subscriber permanent identifier (SUPI) of the first UE. The registration request message may include capability information indicating support for dual steering via two 3GPP accesses.

In step S2402, the AMF may receive subscription information from the UDM.

For example, the AMF may transmit a registration message that includes the SUPI of the first UE to the UDM.

For example, the AMF may receive subscription information related to the first UE from the UDM. For example, the subscription information related to the first UE may include the primary SUPI and secondary SUPI related to the steering.

In step S2403, the AMF transmits a registration acceptance message to the device. For example, the AMF may transmit a registration acceptance message to the first UE.

For example, the registration acceptance message may include information that the SUPI of the first UE is the primary SUPI.

For example, the registration acceptance message may include information related to the network for the second UE to perform registration.

Although not shown in the example of FIG. 24, for UE 1, the PDU session establishment procedure may be performed with the SMF. Furthermore, the registration procedure for UE 2 may be performed. Based on the various examples of the present disclosure, the device may perform the PDU session establishment procedure and the registration procedure.

For example, based on the UDM receiving a registration message related to the first PDU session of the first UE from the SMF, the AMF may also receive subscription information from the UDM that includes an SMF ID for the PDU session related to dual steering.

For example, the device may receive rules related to dual steering from the SMF. For example, rules related to dual steering may include information related to primary access and secondary access associated with the primary SUPI and secondary SUPI. For example, the device may receive a URSP rule related to dual steering from the PCF.

In step S2404, the device transmits a PDU session establishment request message to the AMF.

For example, based on the primary SUPI, after the first PDU session of the first UE is established, the AMF may receive a PDU session establishment request message from the second UE included in the device to establish the second PDU session.

For example, the request type of the PDU session establishment request message may be a PDU request related to the dual steering. The ID of the first PDU session and the ID of the second PDU session may be the same.

In step S2405, the AMF selects an SMF.

For example, based on subscription information and the secondary SUPI included in the PDU session establishment request message, the AMF may select the SMF related to the first PDU session as the SMF for the second PDU session.

For example, the AMF may forward the PDU session establishment request message to the selected SMF.

For example, based on subscription information, the AMF may select a PCF. For example, the AMF may transmit the primary SUPI and secondary SUPI to the PCF. For example, the primary SUPI and secondary SUPI may be used by the PCF to generate, differently for the UE using the primary SUPI and the UE using the secondary SUPI, an RFSP Index, RAT restriction, etc.

For example, the AMF may receive an Access and Mobility (AM) policy from the PCF based on the primary SUPI and the secondary SUPI.

According to an embodiment of the present disclosure, a UE or DualSteer Device may register with a first network via a first 3GPP access. The network may provide the UE or DualSteer Device with network information related to Dual Steer. The UE or DualSteer Device may determine that it can perform Dual Steer based on the network information related to Dual Steer. Furthermore, the UE or DualSteer Device may determine which 3GPP access/network to perform dual registration with. The UE or DualSteer Device may register with a second network via a second 3GPP access. The PCF may configure/update/generate a URSP for the UE or DualSteer Device to use in the dual registration situation. The PCF may provide the URSP to the UE or DualSteer Device. The UE or DualSteer Device may establish a MA PDU Session based on the URSP to receive services via the two 3GPP accesses/networks (if the service/application/traffic permits/prefers two 3GPP accesses/networks). Furthermore, the UE or DualSteer Device may select/determine the 3GPP access and/or network to receive services via one 3GPP access/network and establish a PDU Session through it.

The present disclosure may have various effects.

For example, the network may configure/provide network information related to Dual Steer to the UE or DualSteer Device. Based on the network information related to Dual Steer, it may be determined whether the UE or DualSteer Device can receive service via Dual Steer. Furthermore, considering the two 3GPP access/network states registered by the UE or DualSteer Device, the network may provide URSP to the UE or DualSteer Device.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

For reference, operations of terminals (e.g., UE, DualSteer device) described in the present disclosure may be implemented by the devices of FIGS. 1 to 3 described above. For example, the terminal may be the first device 100 or second device 200 of FIG. 2. For example, operations of the terminal described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 105 or 206, and execute instructions/programs stored in one or more memories 104 or 204 to perform operations of the terminal (e.g., UE) described in the present disclosure.

Additionally, instructions for performing operations of the terminal described in the present disclosure may be stored in a non-volatile computer-readable storage medium that records them. The storage medium may be included in one or more memories 104 or 204. Instructions recorded in the storage medium may be executed by one or more processors 102 or 202 to perform operations of the terminal described in the present disclosure.

For reference, operations of network nodes (e.g., AMF, SMF, UPF, UDM, H-PCF, V-PCF, NEF, AF, UDR, etc.) or base stations (e.g., NG-RAN, gNB, RAN, (R)AN, etc.) described in the present disclosure may be implemented by devices of FIGS. 1 to 3 to be described below. For example, the network node or base station may be the first device 100 or second device 200 of FIG. 2. For example, operations of the network node or base station described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 106 or 206, and execute instructions/programs stored in one or more memories 104 or 204 to perform operations of the network node or base station described in the present disclosure.

Additionally, instructions for performing operations of the network node or base station described in the present disclosure may be stored in a non-volatile (or non-transitory) computer-readable storage medium that records them. The storage medium may be included in one or more memories 104 or 204. Instructions recorded in the storage medium may be executed by one or more processors 102 or 202 to perform operations of the network node or base station described in the present disclosure.

While preferred embodiments have been described exemplarily above, the present disclosure is not limited to such specific embodiments, and may be modified, changed, or improved in various forms within the scope described in the spirit and claims of the present disclosure.

In the exemplary systems described above, methods are described based on flowcharts as a series of steps or blocks, but are not limited to the order of the described steps, and some steps may occur in different orders or simultaneously with other steps than described above. Additionally, those skilled in the art will understand that the steps shown in the flowcharts are not exclusive, and other steps may be included or one or more steps of the flowcharts may be deleted without affecting the scope of rights.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method for performing communication, the method performed by an Access and Mobility Management Function (AMF), and comprising:
receiving, from the first UE, a registration request message including a subscriber permanent identifier (SUPI) of a first User Equipment (UE), the
wherein the first UE is included in a device including one or more UEs, and
wherein the registration request message includes capability information related to a support for dual steering via two 3GPP accesses;
transmitting, to a UDM, a registration message including the SUPI of the first UE;
receiving, from the UDM, subscription information related to the first UE,
wherein the subscription information related to the first UE includes a primary SUPI and a secondary SUPI related to the dual steering;
transmitting, to the first UE, a registration accept message;
receiving, from a second UE included in the device, a PDU session establishment request message for establishing a second PDU session based on the primary SUPI, after a first PDU session of the first UE has been established,
wherein a request type of the PDU session establishment request message is a PDU request related to the dual steering; and
selecting an SMF related to the first PDU session as a SMF for the second PDU session, based on the subscription information and the secondary SUPI included in the PDU session establishment request message.

2. The method of claim 1,
wherein the registration accept message includes information related to a network for the second UE to perform a registration

3. The method of claim 1 or 2, further comprising:
selecting a PCF, based on the subscription information; and
transmitting the primary SUPI and the secondary SUPI to the PCF.

4. The method of claim 3,
wherein the primary SUPI and the secondary SUPI is used for the PCF to generate RFSP index and/or RAT restriction.

5. The method of any one of claims 1 to 4, further comprising:
receiving, from the PCF, an Access and Mobility (AM) policy based on the primary SUPI and the secondary SUPI.

6. The method of any one of claims 1 to 5, further comprising:
receiving, from the UDM, subscription information including an SMF ID for the PDU session related to the dual steering, based on the UDM receiving the registration message related to the first PDU session from the SMF.

7. The method of any one of claims 1 to 6,
wherein the registration accept message includes information that the SUPI of the first UE is the primary SUPI.

8. An Access and Mobility Management Function (AMF) for performing communication, the AMF comprising:
at least one transceiver;
at least one processor; and
at least one computer memory operably connectable to the at least one processor and storing instructions that, based on being executed by the at least one processor, perform operations comprising: the method of any one of claims 1 to 7.

9. A method for performing communication, the method performed by a device including at least one User Equipment (UE), the method comprising:
transmitting, to an Access and Mobility Management Function (AMF), a registration request message including a subscriber permanent identifier (SUPI) of a first UE included in the device,
wherein the registration request message includes capability information related to support for dual steering via two 3GPP accesses; and
transmitting, to the AMF, a PDU session establishment request message for establishing a second PDU session of a second UE included in the device, after a first PDU session of the first UE is established based on a primary SUPI,
wherein a request type of the PDU session establishment request message is a PDU request related to the dual steering, and the ID of the first PDU session and the ID of the second PDU session are identical, and
wherein the PDU session ID included in the PDU session establishment request message is used by the AMF to select an SMF related to the first PDU session as an SMF for the second PDU session.

10. The method of claim 9,
wherein the registration accept message includes information that the SUPI of the first UE is the primary SUPI.

11. The method of claim 9 or 10, further comprising:
receiving, from the SMF, a rule related to the dual steering.

12. The method of any one of claims 9 or 11,
wherein the rule related to the dual steering includes information related to a primary access and a secondary access related to the primary SUPI and a secondary SUPI

13. The method of any one of claims 9 to 12, further comprising:
receiving, from a PCF, URSP rule related to the dual steering,
wherein the PDU session establishment request message is transmitted, based on the URSP rule related to the dual steering

14. A device including at least one User Equipment (UE), the device comprising:
at least one transceiver;
at least one processor; and
at least one computer memory operably connectable to the at least one processor and storing instructions that, based on being executed by the at least one processor, perform operations comprising: the method of any one of claims 9 to 13.

15. An apparatus in communication system, the apparatus comprising:
at least one transceiver;
at least one processor; and
at least one computer memory operably connectable to the at least one processor and storing instructions that, based on being executed by the at least one processor, perform operations comprising: the method of any one of claims 9 to 13.

16. A non-transitory Computer Readable Medium (CRM) storing instructions that, based on being executed by at least one processor, perform the method of any claims 9 to 13.
